# EUROPEAN PATENT SPECIFICATION

(11) **EP 3 441 844 B1**
(45) Date of publication and mention of the grant of the patent: **05.04.2023**
(21) Application number: 17782660.9
(22) Date of filing: 12.04.2017
(51) Int. Cl.: G06F 1/16, G06F 3/0488, G06F 3/01, G09F 9/30, G06F 3/0481, H04M 1/02, G06F 9/451

(54) **FLEXIBLE DEVICE AND OPERATING METHOD THEREFOR**
FLEXIBLE VORRICHTUNG UND BETRIEBSVERFAHREN DAFÜR
DISPOSITIF SOUPLE ET SON PROCÉDÉ DE FONCTIONNEMENT

(30) Priority: 12.04.2016 KR 20160045114
(43) Date of publication of application: 13.02.2019
(73) Proprietor: Samsung Electronics Co., Ltd., Suwon-si, Gyeonggi-do 16677 (KR)
(72) Inventor: LEE, Chae-Kyung, Seoul 03321 (KR); YI, Sun-Young, Seongnam-si Gyeonggi-do 13602 (KR); JEON, Ha-Young, Seoul 06784 (KR); LEE, Won, Seoul 06663 (KR); KIM, Bo-Keun, Suwon-si Gyeonggi-do 16699 (KR)
(74) Representative: HGF
(86) International application number: PCT/KR2017/003953
(87) International publication number: WO 2017/179905

(56) References cited:
- EP-A1- 2 908 236
- EP-A1- 2 958 006
- EP-A2- 2 693 319
- WO-A1-2015/133658
- WO-A1-2015/199270
- KR-A- 20100 082 451
- KR-A- 20110 129 750
- KR-A- 20150 011 690
- KR-A- 20150 125 554
- KR-A- 20150 135 060
- US-A1- 2012 299 845
- US-A1- 2013 145 311
- US-A1- 2013 229 324
- US-A1- 2014 152 553

## Description

### [Technical Field]

The present disclosure generally relates to an electronic device and a method of operating the same, and more particularly, to a flexible device including a flexible display and a method of operating the same.

### [Background Art]

Recently, technology related to flexible displays which can be extended by force applied from the outside has been actively developed. The flexible display may be temporarily bent or maintain the bent state by applied force and, accordingly, a user may watch a screen displayed on a display with various areas according to user's taste. Further, with the recent development of electronics including a flexible Printed Circuit Board (PCB), a flexible device of which the whole device capable of temporarily being bent or maintaining the bent state by force applied from the outside has been developed.

The user may control the flexible device in the desired form and use the controlled device. Further, the flexible device may include a touch panel and the user may input various control commands into the device controlled in the desired form.

EP2958006 A1 describes an electronic device and method for controlling a deformable display. The method includes sensing deformation of the display, comparing a degree of the sensed information with a predetermined value, dividing at least a part of the display based on a result of the comparison, determining at least a part of divided areas to be an active area or inactive area, and controlling at least part of information displayed in at least a part of the divided areas.

US2013/0 145311 A1 describes a method and apparatus configured to control a display in a portable terminal including sensing that the flexible display is bent, dividing the flexible display into a main screen and a sub-screen, and outputting first information through the main screen and outputting second information through the sub screen.

EP2908236 A1 describes an electronic device including a flexible display, a detector, and a controller. The detector detects bending of the flexible display. The controller displays contents on the flexible display, and displays first contents related to the contents on a bending region where the bending has been detected based on a signal output from the detector.

EP2693319 A2 describes a flexible display apparatus including a flexible display, a sensor which senses bending of the flexible display, and a controller which determines a screen activation region and a screen inactivation region from among a plurality of display regions of the flexible display based on the sensed bending, and displays a predetermined screen on the screen activation region. In certain embodiments (see Figs. 33 and 34), if a certain screen region is inactivated by bending, such that region becomes a screen inactivation region, a content that has been displayed on the screen inactivation region or a content associated therewith may be displayed on a screen activation region.

US2014/0 152553 A1 describes a method in an electronic device comprising when a display unit is deformed, determining a display area visible to a user, and displaying content on the confirmed display area. An apparatus for displaying content on an electronic device comprises a processing circuit configured to detect that a flexible display unit is bended, recognize at least a part of a user's body, determine which display area is visible to the user based on the user position; and move at least part of content on the visible display area.

WO2015/133658 A1 describes a mobile device including a sensor unit configured to detect a first action and a second action of a user to fold the mobile device, a control unit configured to control a folding indicator to be outputted on a screen according to the detected first action of the user, configured to control a function corresponding to the detected second action to be executed, configured to control data resulted from executing the function to be outputted on the screen, configured to control the mobile device based on the outputted data, and a display configured to output the folding indicator and the data resulted from executing the function.

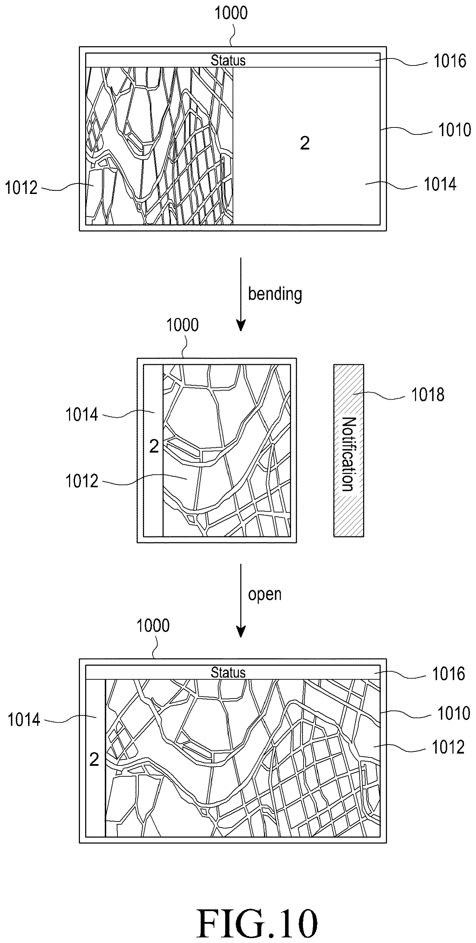

US 2013/0229324 A1 discloses a display method applied to an electronic device, including: displaying display objects of a display unit according to a first display parameter; acquiring a display adjusting command if a monitored result indicates that a fold or unfold operation is performed on the electronic device; adjusting the first display parameter of at least one display object of the display unit according to the display adjusting command to generate a second display parameter, and displaying the at least one display object according to the second display parameter. In an embodiment (see Figs. 10A and 10B), different display objects are displayed in different display regions, and there are multiple implementation ways for selecting the object for which a display parameter is to be adjusted, preferable ways including: only the display object that intersects with a fold line is adjusted; only the display object at a top layer is adjusted; only the display object in certain display region is adjusted; all display objects are adjusted; and display objects with different click rate are displayed in different display regions.

### [Detailed Description of the Invention]

### [Technical Problem]

According to a flexible device of the prior art, when the form of the flexible device is changed due to a bending characteristic thereof, a function/functions or an operation/operations according to the bending characteristic cannot be provided to a user and thus the user may have difficult in controlling the flexible device.

Various embodiments of the present disclosure disclose a flexible device capable of providing a user with various graphic user interfaces and various control methods for controlling the flexible device based on a bending characteristic of the flexible device.

Various embodiments of the present disclosure disclose a method of operating a flexible device capable of providing a user with various graphic user interfaces and various control methods for controlling the flexible device based on a bending characteristic of the flexible device.

### [Technical Solution]

According to a first aspect of the present invention, there is provided a flexible device as described in claim 1. According to a second aspect of the present invention, there is provided a computer-readable recording medium as described in claim 13.

The embodiments and/or examples described in the following description which are not covered by the appended claims are considered as not being part of the present invention.

In accordance with an aspect of the present disclosure, a flexible device is provided. The flexible device includes: a sensor module; a flexible display; and a processor configured to, when an event for bending of the flexible device is detected by the sensor module while an execution screen of a main application and an execution screen of a sub application are displayed in a first window and a second window, respectively, perform control to relocate the first window and the second window according to the event for bending, and the sub application may include an application for performing at least one of a plurality of functions included in the main application.

In accordance with another aspect of the present disclosure, a flexible device is provided. The flexible device includes: a sensor module; a flexible display; and a processor configured to, when the generation of the event for bending of the flexible display is detected by the sensor module while a plurality of windows in which a plurality of applications are executed are displayed on the flexible display, perform control to relocate the plurality of displayed windows according to the generated event for bending.

In accordance with another aspect of the present disclosure, a computer-readable recording medium storing instructions configured to perform at least one operation by a processor is provided. The at least one operation includes: displaying an execution screen of a main application and an execution screen of a sub application in a first window and a second window, respectively; detecting generation of an event for bending of a flexible display; and relocating the first window and the second window according to the event for bending when the generation of the event for bending of the flexible display is detected, wherein the sub application includes an application for performing at least one function among a plurality of functions included in the main application.

In accordance with another aspect of the present disclosure, a computer-readable recording medium storing instructions configured to perform at least one operation by a processor is provided. The at least one operation includes: displaying a plurality of windows in which a plurality of applications are executed on the flexible display; detecting the generation of the event for bending of the flexible display; and relocating the plurality of displayed windows according to the generated event for bending when the generation of the event for bending of the flexible display is detected.

### [Advantageous Effects]

Various embodiments of the present disclosure can improve user convenience by providing a user with various graphic user interfaces and various control methods for controlling the flexible device based on a bending characteristic of the flexible device.

It will be apparent to those skilled in the art that the advantages of the present disclosure are not limited to those mentioned above, and the present disclosure includes various implicit advantages.

### [Brief Description of Drawings]

FIG. 1 is a block diagram illustrating a flexible device according to various embodiments of the present disclosure;
FIG. 2 illustrates a method of operating the flexible device according to various embodiments of the present disclosure;
FIGs. 3A to 3C illustrate the flexible device according to various embodiments of the present disclosure;
FIGs. 3D to 4D illustrate a function/functions or an operation/operations for controlling various objects displayed on the flexible device according to bending of the flexible device according to various embodiments of the present disclosure;
FIG. 5 illustrates a function/functions or an operation/operations for controlling various objects displayed on the flexible device when the flexible device is turned over while the flexible device is bent according to various embodiments of the present disclosure;
FIGs. 6A to 6E illustrate functions or operations for switching the main application and the sub application displayed on the flexible device according to various embodiments of the present disclosure;
FIGs. 7A to 7D illustrate a function/functions or an operation/operations for relocating a plurality of windows displayed on the flexible device as the flexible device is bent according to various embodiments of the present disclosure;
FIGs. 8A and 8B illustrate a function/functions or an operation/operations for relocating a plurality of windows displayed on the flexible device when the flexible device is open while being bent according to various embodiments of the present disclosure;
FIG. 9 illustrates functions or operations for relocating the main application, the sub application, and the status bar as the flexible device is bent according to various embodiments of the present disclosure;
FIG. 10 illustrates functions or operations for relocating two windows and the status bar as the flexible device is bent according to various embodiments of the present disclosure;
FIG. 11 illustrates functions or operations for relocating three windows and the status bar as the flexible device is bent according to various embodiments of the present disclosure;
FIG. 12 illustrates functions or operations for relocating four windows and the status bar as the flexible device is bent according to various embodiments of the present disclosure;
FIG. 13 illustrates functions or operations for displaying windows on the flexible device according to the window orientation determined on the basis of a connection terminal included in the flexible device according to various embodiments of the present disclosure;
FIGs. 14 to 17 illustrate function or operations for displaying windows on the flexible device according to the window orientation determined based on shape of the user's hand or fingers gripping the flexible device according to various embodiments of the present disclosure;
FIG. 18 illustrates an example for describing an electronic device within a network environment according to various embodiments of the present disclosure;
FIG. 19 illustrates an example for describing an electronic device according to various embodiments of the present disclosure; and
FIG. 20 illustrates an example for describing a program module according to various embodiments of the present disclosure.

### [Mode for Carrying out the Invention]

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g.,embedded processor) only for performing the corresponding operations or a generic-purpose processor (e.g., Central Processing Unit (CPU) or Application Processor (AP)) that can perform the corresponding operations by executing one or more software programs stored in a memory device.

The terms used herein are merely for the purpose of describing particular embodiments and are not intended to limit the scope of other embodiments. A singular expression may include a plural expression unless they are definitely different in a context. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync^{™}, Apple TV^{™}, or Google TV^{™}), a game console (e.g., Xbox^{™} and PlayStation^{™}), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR) , a Flight Data Recorder (FDR) , a Vehicle Infotainment Devices, an electronic devices for a ship (e.g., a navigation device for a ship, and a gyro-compass), avionics, security devices, an automotive head unit, a robot for home or industry, an Automatic Teller's Machine (ATM) in banks, Point Of Sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). In various embodiments, the electronic device may be a combination of one or more of the aforementioned various devices. According to some embodiments, the electronic device may also be a flexible device. Further, the electronic device according to an embodiment of the present disclosure is not limited to the aforementioned devices, and may include a new electronic device according to the development of technology.

Hereinafter, an electronic device according to various embodiments will be described with reference to the accompanying drawings. In the present disclosure, the term "user" may indicate a person using an electronic device or a device (e.g., an artificial intelligence electronic device) using an electronic device.

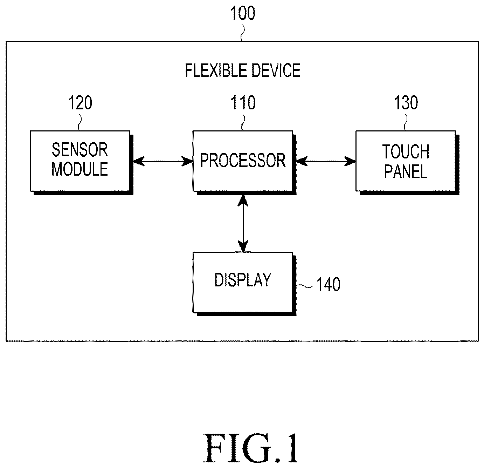

FIG. 1 is a block diagram illustrating a flexible device according to various embodiments of the present disclosure.

Referring to FIG. 1, a flexible device 100 according to various embodiments of the present disclosure may include a processor 110, a sensor module 120, a touch panel 130, and a display 140.

The processor 110 may include one or more of a Central Processing Unit (CPU), an Application Processor (AP), and a Communication Processor (CP). The processor 110 may control, for example, at least one other element of the flexible device 100 and/or carry out operations or data processing related to communication.

The sensor module 120 may measure a physical amount or detect an operational state of the flexible device 100 and convert the measured or detected information into an electrical signal. The sensor module 120 includes a bending determination sensor that detects a bending state of the flexible device 100. When the flexible device 100 is bent at a predetermined angle or more, the sensor module 120 determines that the flexible device 100 is bent.

The touch panel 130 may use at least one of, for example, a capacitive type, a resistive type, an infrared type, and an ultrasonic type. The touch panel 130 may further include a control circuit. The touch panel 130 may further include a tactile layer and provide a tactile reaction to the user.

The display device 140 may include a flexible display. The display 140 may include, for example, a Liquid Crystal Display (LCD), a Light-Emitting Diode (LED) display, an Organic Light-Emitting Diode (OLED) display, a MicroElectroMechanical Systems (MEMS) display, and an electronic paper display. The display 140 may display, for example, various types of content (for example, text, images, videos, icons, symbols, etc.) to users. The display 140 may include a touch screen and receive, for example, a touch input, a gesture input, a proximity input, or a hovering input using an electronic pen or a user's body part. The display 140 may be extended or bent by force applied from the outside.

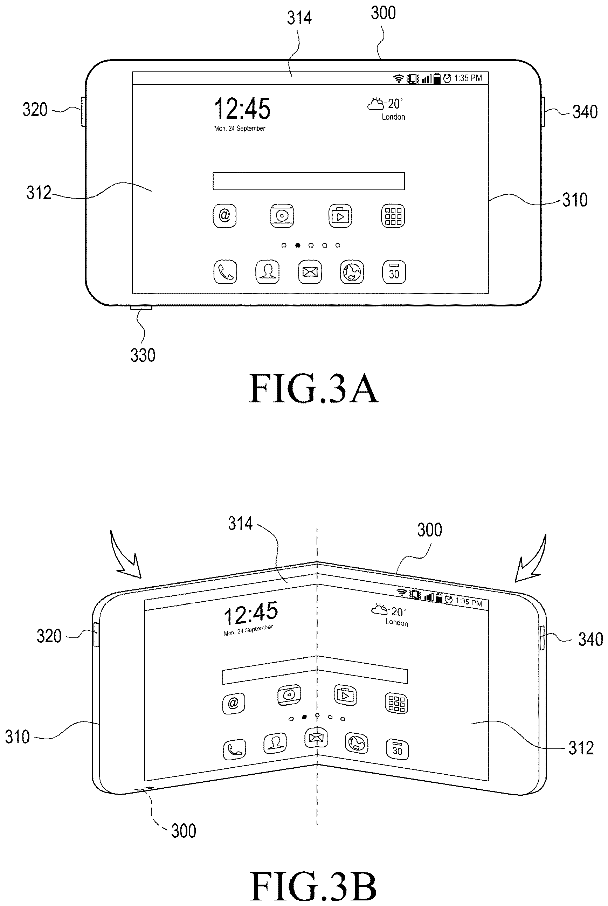

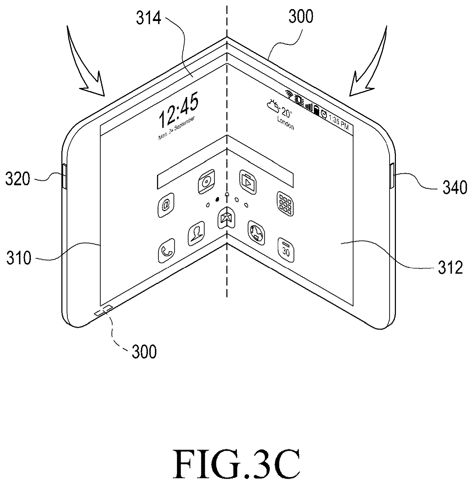

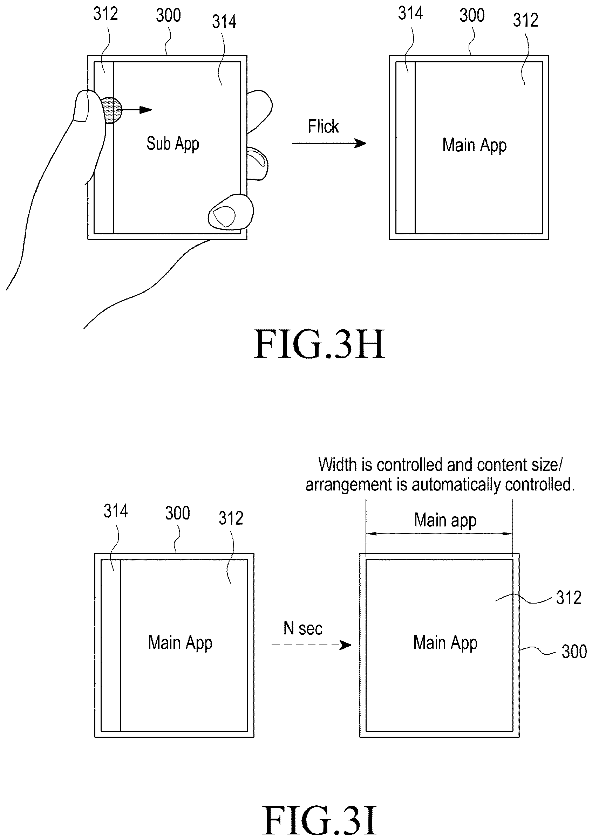

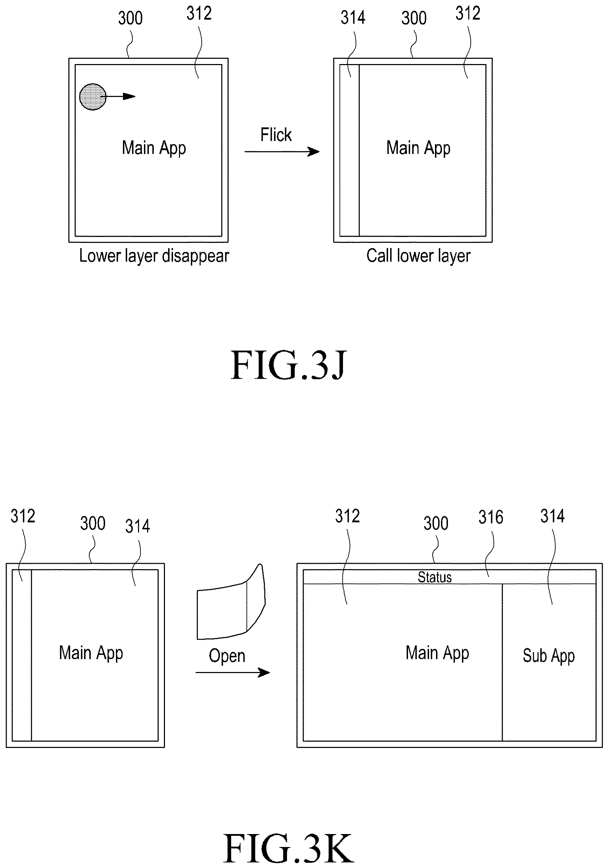

At least one element of the flexible device 100 according to various embodiments of the present disclosure may be manufactured on the flexible printed circuit board (PCB). At least the part of the flexible PCB may be extended or bent by force applied from the outside. Accordingly, the flexible device 100 including the flexible display may be extended or bent by force applied from the outside as illustrated in FIGs. 3B and 3C.

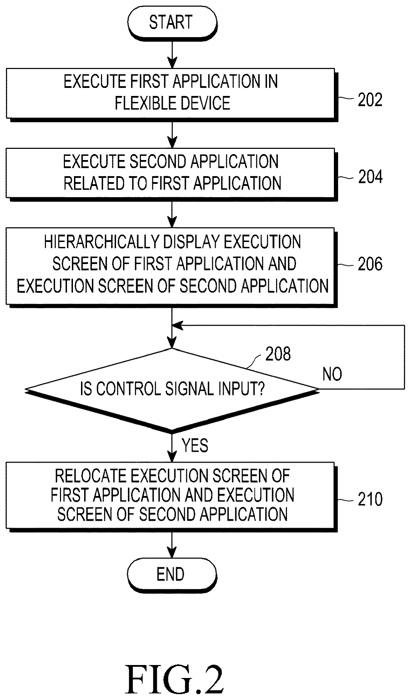

FIG. 2 illustrates a method of operating the flexible device according to various embodiments of the present disclosure.

Referring to FIG. 2, the method of operating the flexible device according to various embodiments of the present disclosure includes a process 202 of executing a first application in the flexible device. The "first application" may include a "main application." The main application may be referred to as the term including, for example, a certain application which can be independently executed in a flexible device (for example, the flexible device 100). The executable application may include various applications, for example, an S note^{™} application, an e-mail application, an e-book reader application, and a calendar application.

The method of operating the flexible device according to various embodiments of the present disclosure includes a process 204 of executing a second application related to the first application. The "second application" may be used as a meaning including a "sub application" or a "composing application". The sub application or the composing application may be an application for performing at least one function (for example, a function of an "new event" for a specific day) among a plurality of functions included in the main application (for example, the calendar application). In other words, the sub application may be a function or an application included in/dependent on the main application. For example, when the main application is the "S note TM application," the sub application may be a function/application of "new page." Further, when the main application is the "e-book reader application," the sub application may be a function/application of "memo". However, according to various embodiments of the present disclosure, the term "second application" may be the term including a specific application different from the "first application" (that is, an application executed independently from the first application).

The method of operating the flexible device according to various embodiments of the present disclosure includes a process 206 of hierarchically displaying an execution screen of the first application and an execution screen of the second application. In this specification, an execution screen on which an application is executed or an area in which the execution screen is displayed may be referred to as a "window" for convenience of description. The process 206 will be described below in detail.

The method of operating the flexible device according to various embodiments of the present disclosure includes a process 208 of determining whether a control signal is input into the processor. The control signal may include signals acquired by various elements included in the flexible device. The control signals include a signal related to an event for bending of the flexible device, which is detected by a sensor module (for example, the sensor module 120). The control signals further include a signal related to a touch input received from the user in order to control various objects displayed on the flexible device. In addition, the control signals may further include various signals.

The method of operating the flexible device according to various embodiments of the present disclosure includes a process 210 of, when it is determined that the control signal is input, rearranging the execution of the first application and the execution screen of the second application. The process 210 will be described below in detail.

FIGs. 3A to 3C illustrate the flexible device according to various embodiments of the present disclosure.

Referring to FIG. 3A, a flexible device 300 according to various embodiments of the present disclosure may include a flexible display 310, a volume control button 320, a connection terminal 330, and a power button 340. On the flexible display 310, for example, a home screen 312, a network operator to which the flexible device 300 subscribes, and a status bar 314 for displaying information related to the current state of the flexible device 300 such as a network connection state, the remaining charge of a battery, and the current time. According to various embodiments of the present disclosure, the flexible display 310 may be located on both sides of the flexible device 300. The flexible display 310 may receive a touch input from the user. The flexible display 310 may include a single display. According to various embodiments of the present disclosure, when the flexible display 310 is bent, lateral parts of the flexible display 310 may be bent with a predetermined curvature unlike FIGs. 3B and 3C.

The volume control button 320 may receive a volume control command from the user. The flexible device 300 may control the volume of a sound output from the flexible device 300 according to the received volume control command.

An external device such as a USB may be connected to the connection terminal 330. The flexible device 300 may transmit/receive data to/from the external device connected to the connection terminal 330.

Referring to FIGs. 3B and 3C, the flexible device 300 according to various embodiments of the present disclosure may be extended or bent by force applied from the outside as described above. To this end, at least some of the housing of the flexible device 300 may formed with a flexible material which can be extended or bent by force applied from the outside. Alternatively, the housing may be configured such that the bent part of the flexible device 300 is formed by hinge coupling. The housing may fix the flexible display 310 located on the front surface and the rear surface of the flexible device 300. The volume control button 320, the connection terminal 330, and the power button 340 may be included in the housing.

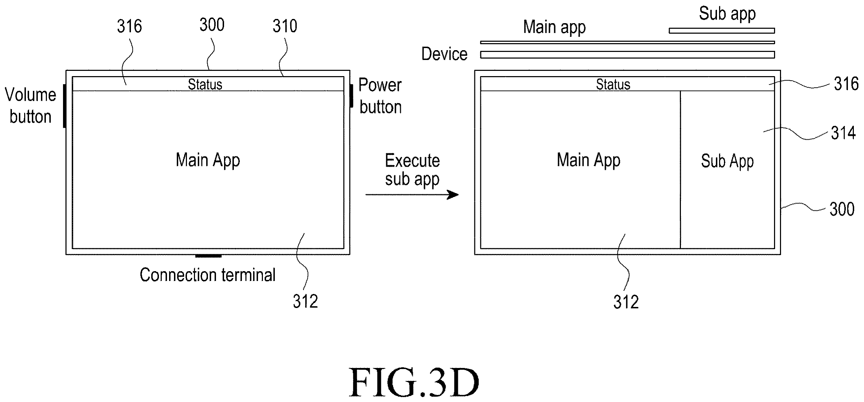

FIGs. 3D to 4D illustrate a function/functions or an operation/operations for controlling various objects displayed on the flexible device as the flexible device is bent according to various embodiments of the present disclosure.

Referring to FIG. 3D, the flexible display 310 of the flexible device 300 may display a first window 312 on which the execution screen of the main application is displayed and the status bar 316. The processor (for example, the processor 110) of the flexible device 300 may display a second window 314 for displaying the execution screen of the sub application on the flexible display 310 according to a request for executing the sub application. As illustrated in FIG. 3B, the main application and the sub application may be displayed on different layers. Further, the main application and the sub application may be overlappingly displayed according to a predetermined ratio. However, according to various embodiments of the present disclosure, the main application and the sub application may be displayed on the same layer. In this case, the main application and the sub application may be split to be displayed according to a predetermined ratio.

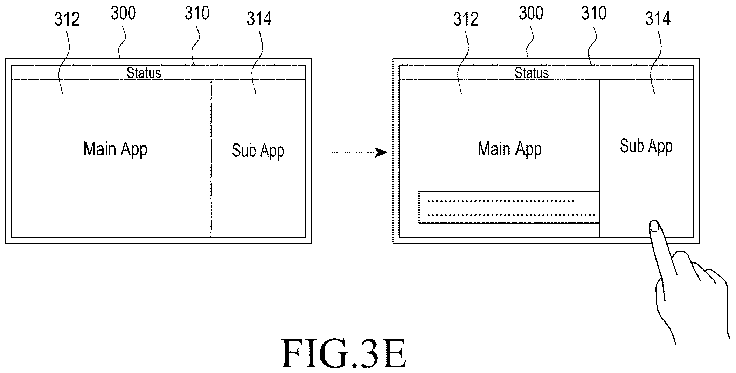

Referring to FIG. 3E, the processor may perform control to display a particular window (for example, the second window 314) on the top layer according to a user's touch input on the flexible display 300.

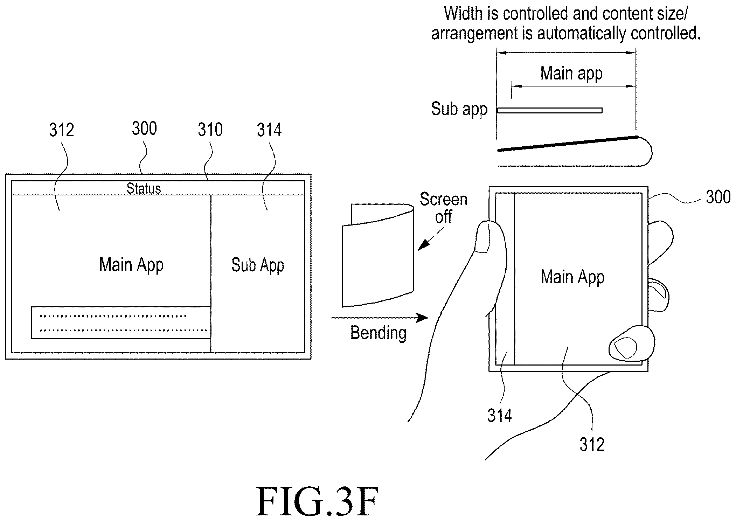

Referring to FIG. 3F, when generation of an event for bending of the flexible device 300 or the flexible display 310 is detected in a state in which the particular window is displayed on the top layer according to the touch input, the processor performs control to display the first window 312 on the top layer. When the generation of the event for bending is detected, he processor may switch the flexible display 310 on the rear surface into an idle mode; in embodiments of the invention, the processor turns off the display on the rear surface. The processor performs control to overlappingly display the first window 312 and the second window 314 according to a predetermined ratio. However, according to various embodiments of the present disclosure not covered by the claims, the processor may perform control to continuously display the currently displayed screen without switching the display on the rear surface into the idle mode or turning off the display.

Although FIG. 3F illustrates that the first window 312 is located on the top regardless of which window is located on the top before the generation of the event for bending is detected, this is only an example of description of the present disclosure. According to various embodiments of the present disclosure, when the generation of the event for bending is detected in a state in which a particular window (for example, the second window 314) is displayed on a higher layer according to the touch input, the processor may perform control to display the second window 314 on the top layer while the flexible display is bent. In other words, when the second window 314 is a window last focused before the generation of the event for bending and the flexible device is bent, the second window 314 may be displayed on the top layer.

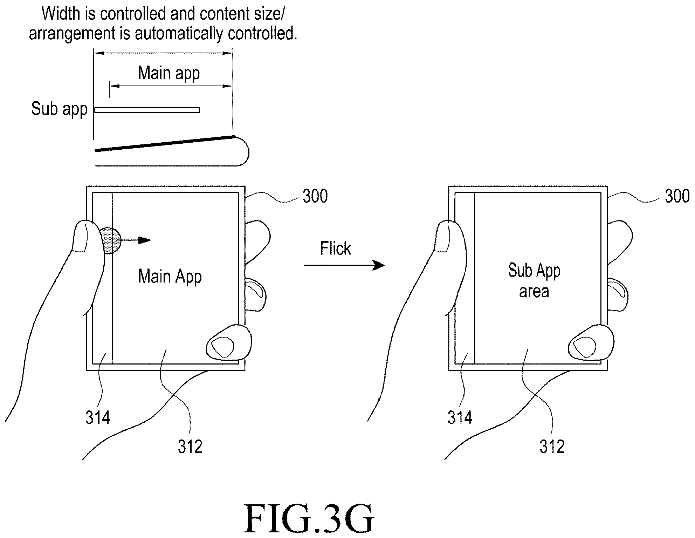

Referring to FIG. 3G, when a user's particular gesture (for example, a flick gesture) is received in a state in which the first window 312 and the second window 314 overlap each other, the processor may perform control to display the second window 314 on the top layer. On the contrary, the processor may perform control to display the first window 312 on the top layer as illustrated in FIG. 3H.

Referring to FIG. 31, when a predetermined time passes in the state in which the first window 312 and the second window 314 overlap each other, the processor may perform control to display only the first window 312 on the flexible display 310. Referring to FIG. 31, when the user's particular gesture is input in the state in which only the first window 312 is displayed, the process may perform control to display the second window 314. According to various embodiments of the present disclosure, the first window 312 and the second window 314 may be interchangeably executed.

Referring to FIG. 3K, when generation of an event for opening of the flexible device 300 or the flexible display 310 is detected in the state in which the first window 312 is displayed, the processor may display the first window 312 and the second window 314 in the state before the generation of the event for bending is detected. For example, when the second window 314 is located on the top layer before the generation of the event for bending is detected, the processor may perform control to display the second window 314 on the top layer even though the first window 314 is displayed on the top layer while the flexible device 300 is bent. On the contrary, according to various embodiments of the present disclosure, when the generation of the event for opening is detected, the processor may perform control to display the window (for example, the first window 312), which is displayed on the top layer before the generation of the event for opening is detected, on the top even in the open state.

As described above, according to various embodiments of the present disclosure, the first window 312 and the second window 314 may be displayed on the same layer. In this case, the processor may acquire an effect of overlappingly display respective windows by controlling display ratios of the first window 312 and the second window 314 on the same layer. That is, various embodiments of the present disclosure can be equally applied to even the case in which the first window 312 and the second window 314 are displayed on the same layer.

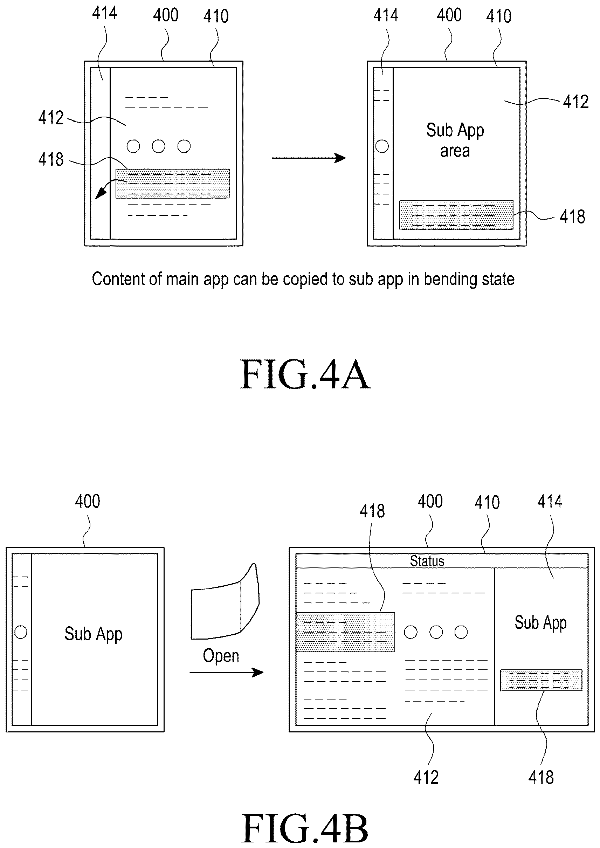

Referring to FIG. 4A, a first window 412 and a second window 414 may be displayed on a flexible device 400 according to various embodiments of the present disclosure. When an event for a copy or movement of a particular object 418 (for example, a drag gesture for the particular object 418) is input from the user, the processor of the flexible device 400 may move the particular object 418 to a position designated by the user or copy the particular object 418 at a position designated by the user. Referring to FIG. 4B, when the event for opening of the flexible device 400 is generated, the moved or copied particular object 418 may be displayed together with the first window 412 and the second window 414.

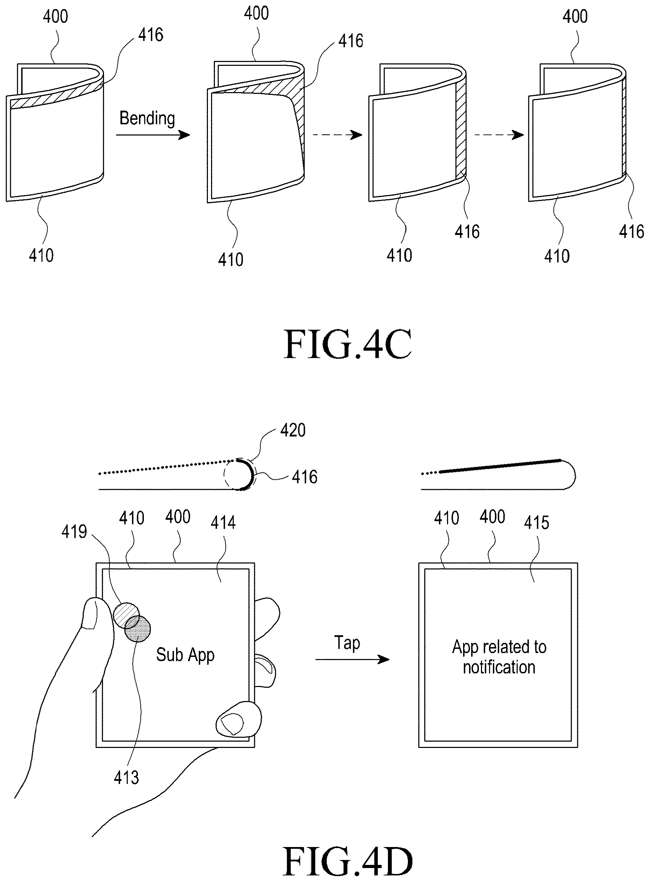

Referring to FIGs. 4C and 4D, when the generation of the event for bending of the flexible device 400 is detected, the processor may perform control to display a status bar 416 on a side portion 420 of the flexible device 410. The processor may perform control to display not only various pieces of information included in the status bar 416 but also notification information related to the operation of the flexible device, for example, the content of received SNS messages and a list of missed calls. After the status bar 416 moves to the side portion 420, an indicator 419 for displaying the notification information on a front portion of the flexible device 400 may be displayed. When a user's touch input for the indicator 419 is received, the processor may perform control to display a notification window 415 including applications related to the notification information, for example, various applications such as an SNS application, a phone application, and/or an SMS application. The indicator 419 may be displayed around a part 413 touched by a user's particular body part (for example, a thumb).

According to various embodiments of the present disclosure, the processor may perform control to display only information included in the status bar 416 on the side portion 420. As illustrated in FIG. 4C, a process in which the status bar 416 moves to the side portion 420 may be displayed on the flexible display 410 for a visual effect.

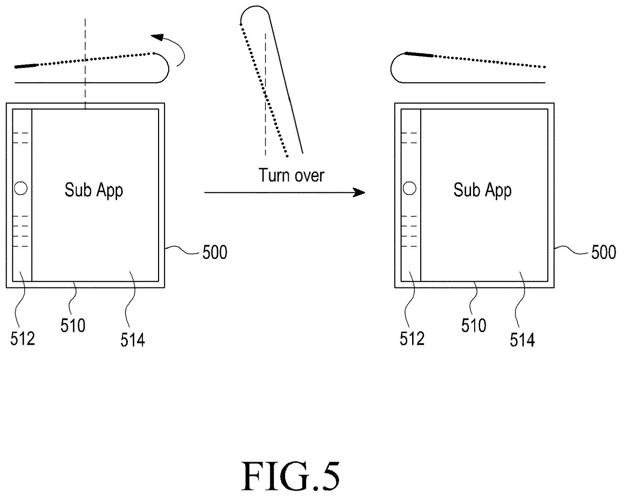

FIG. 5 illustrates a function/functions or an operation/operations for controlling various objects displayed on the flexible device when the flexible device is turned over while the flexible device is bent according to various embodiments of the present disclosure.

Referring to FIG. 5, in a state in which a first window 512 and a second window 514 are displayed on a flexible display 510 of a flexible device 500 according to various embodiments of the present disclosure, generation of an event for turning over of the flexible device 500 may be detected. When the generation of the event for turning over of the flexible device 500 is detected, the processor may change the display orientation of the first window 512 and the second window 514 according to the turning over.

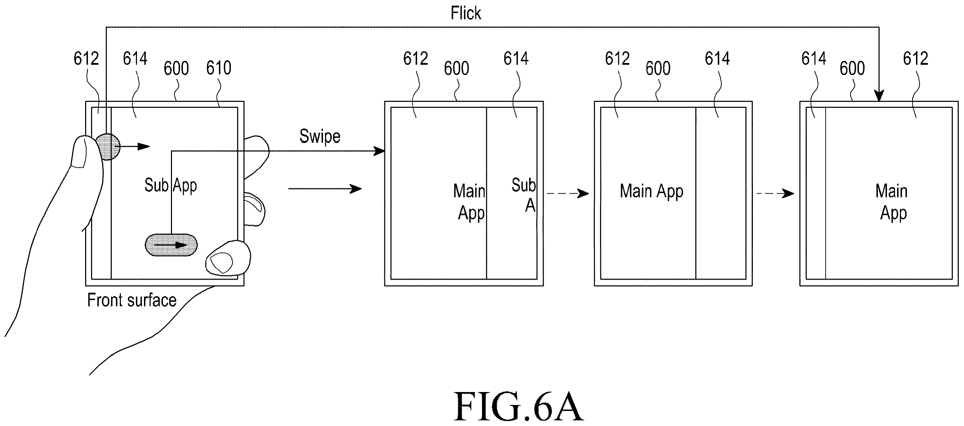

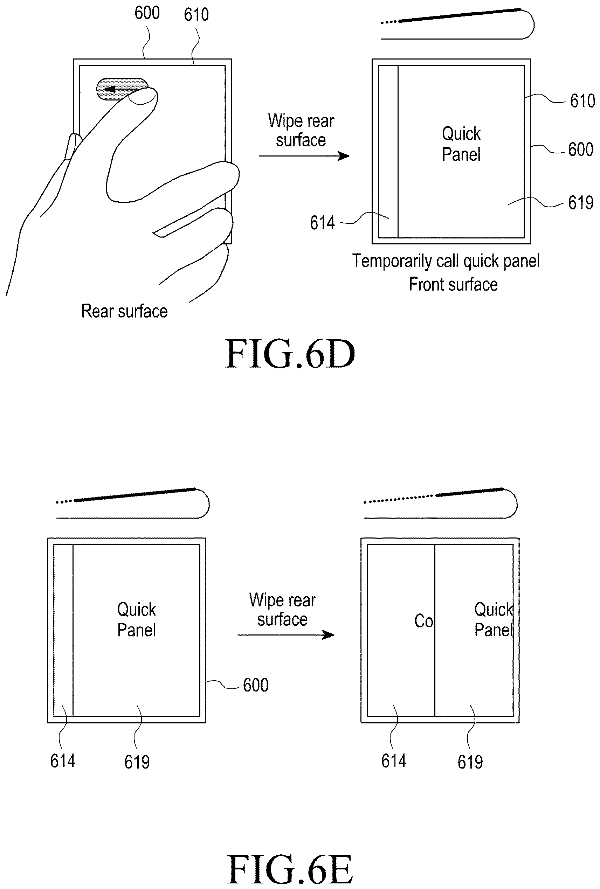

FIGs. 6A to 6E illustrate functions or operations for switching the main application and the sub application displayed on the flexible device according to various embodiments of the present disclosure.

Referring to FIG. 6A, in a state in which a first window 612 and a second window 614 are displayed on a flexible display 610 of a flexible device 600 according to various embodiments of the present disclosure, various gestures may be input by the user. When a touch input such as, for example, a swipe gesture is input by the user, the processor of the flexible device 600 may visually display and provide with the user an operation/process of switching (in other words, swapping) layers of the first window 610 and the second window 614. For example, when a flick gesture is input by the user, the processor of the flexible device 600 performs control to display the first window 612 (or the second window 614) without the operation/process of switching the layers of the first window 610 and the second window 614.

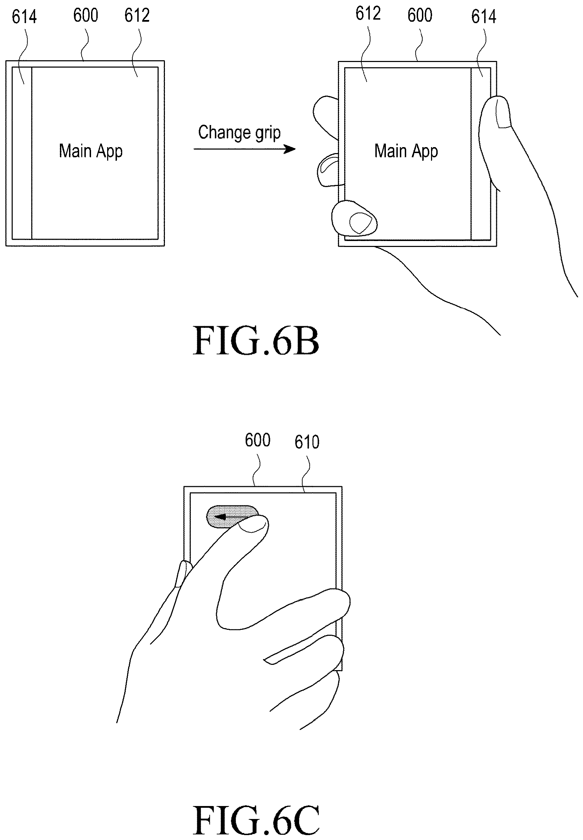

Referring to FIG. 6B, the user may change the hand holding (gripping) the flexible display 600 (for example, from a left hand to a right hand). When the hand holding the flexible display 600 is changed, the processor may change the display orientation of the first window 612 and the second window 614. Whether the hand holding the flexible device 600 is changed may be determined on the basis of various pieces of information such as a direction or shape of the hand of the user gripping the flexible device 600 detected by the rear flexible display of the flexible device 600 or the number of fingers that touch the flexible device 600. In embodiments of the invention, the rear surface of the flexible display 610 includes a touch panel and detects the user's touch input as illustrated in FIG. 6C.

Referring to FIG. 6D, the processor may receive a touch gesture (for example, a swipe gesture) on the rear surface of the flexible device 610 from the user. When the touch gesture is input, the processor may display a quick panel window 619 for displaying an application predetermined by the user on the front surface of the flexible device 610. The flexible device 600 may receive the user's touch gesture on the rear surface while the quick panel window 619 is displayed. In this case, the processor may perform control to display a window (for example, the second window 614), which was displayed before the quick panel window 619. According to various embodiments of the present disclosure, when the user's touch gesture on the rear surface of the flexible display 610 is input, the processor may perform control to display a notification window (for example, the notification window 415) together with the quick panel window 619.

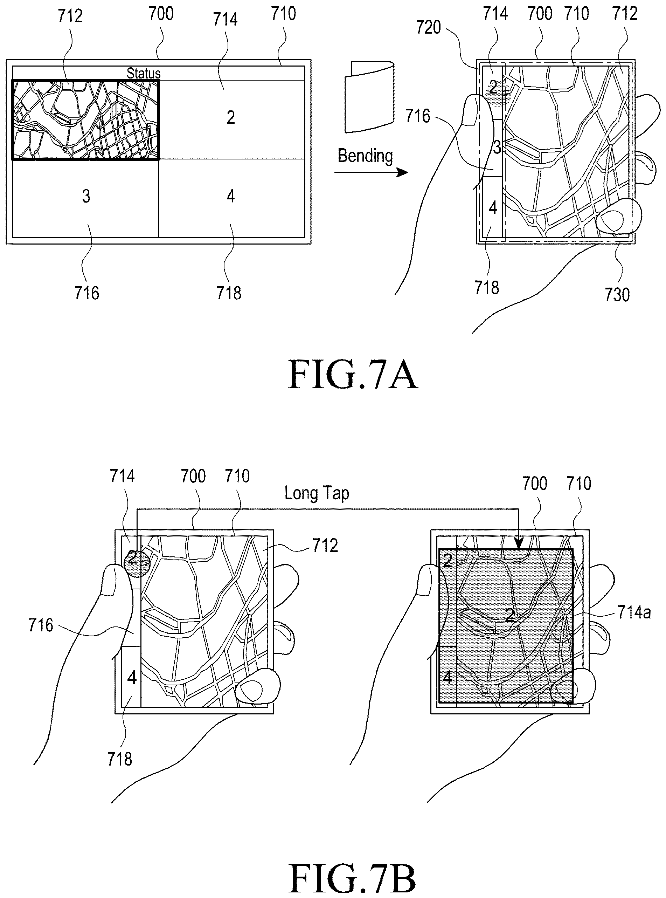

FIGs. 7A to 7D illustrate a function/functions or an operation/operations for relocating a plurality of windows displayed on the flexible device as the flexible device is bent according to various embodiments of the present disclosure.

Referring to FIG. 7A, a flexible device 700 according to various embodiments of the present disclosure may display a plurality of windows 712, 714, 716, and 718 for displaying respective execution screen of a plurality of applications. The plurality of applications may be applications executed independently from each other having no relation between the main application and the sub application. According to various embodiments of the present disclosure, the execution screens of the plurality of applications may be displayed on the first window 712, the second window 714, the third window 716, and the fourth window 718, respectively. When generation of an event for bending of the flexible device 700 is detected, the processor of the flexible device 700 may perform control to display a currently activated application in a main area 730 and other applications in a sub area 720. Although the applications displayed in the sub area are marked with "numbers" in FIG. 7A, various objects such as representative icons or representative screens indicating characteristics of the applications as well as the numbers may be displayed.

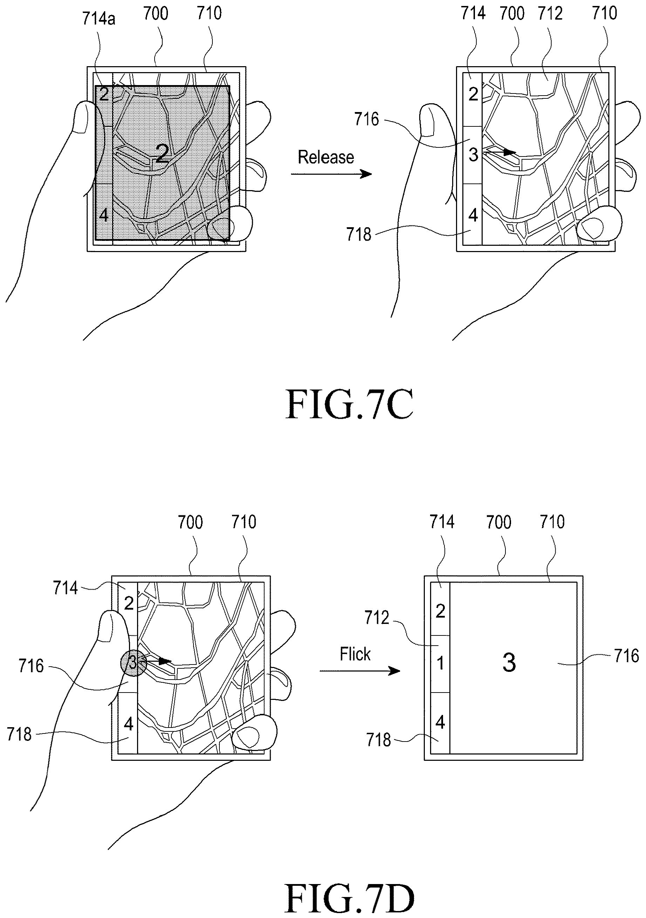

Referring to FIG. 7B, the flexible device 700 may receive a touch (or hovering) gesture for one of a plurality of applications displayed in the sub area. When the touch gesture is input, the processor may perform control to display a preview screen 714a for one application corresponding to the touch gesture. The touch gesture may include various gestures, for example, tap, long tap, and swipe. Further, as illustrated in FIG. 7C, when the touch (or hovering) gesture input ends, the processor may perform control to end displaying of the preview screen 714a.

Referring to FIG. 7D, when a touch gesture (for example, a swipe gesture) for one application (for example, application 3) of the plurality of applications displayed in the sub area 720 is input, the processor may perform control to display the application corresponding to the touch gesture in the main area 730.

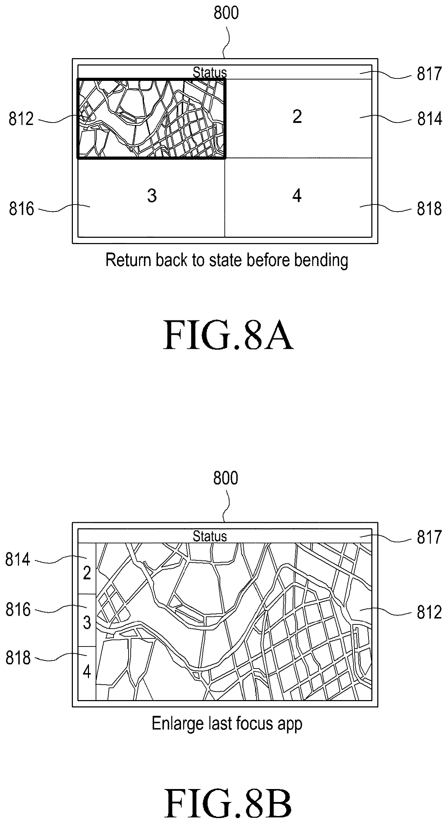

FIGs. 8A and 8B illustrate a function/functions or an operation/operations for relocating a plurality of windows displayed on the flexible device when the flexible device is open while being bent according to various embodiments of the present disclosure.

Referring to FIG. 8A, when a flexible device 800 is changed from a bending state to an open state according to various embodiments of the present disclosure, the processor of the flexible device 800 may split and relocate a plurality of windows 812, 814, 816, and 818 to be in the state right before the generation of the event for bending is detected.

Referring to FIG. 8B, when the flexible device 800 is bent and a focused (in other words, activated) application (for example, a map application) is an application for displaying/reproducing an image/video file (for example, a map application, a gallery application, or a video application), the processor may perform control to enlarge and display the focused application. That is, when the flexible device 800 is open, the processor may determine a display type (in other words, FIG. 8A or 8B) of at least one window displayed on the flexible device 800 according to the type of the focused application (that is, whether the application is an application for displaying/reproducing an image/video file) and display the at least one window according to the determined display type. The application for displaying/reproducing the image/video file may be designated by the user or designated in advance during a manufacturing process of the flexible device 800.

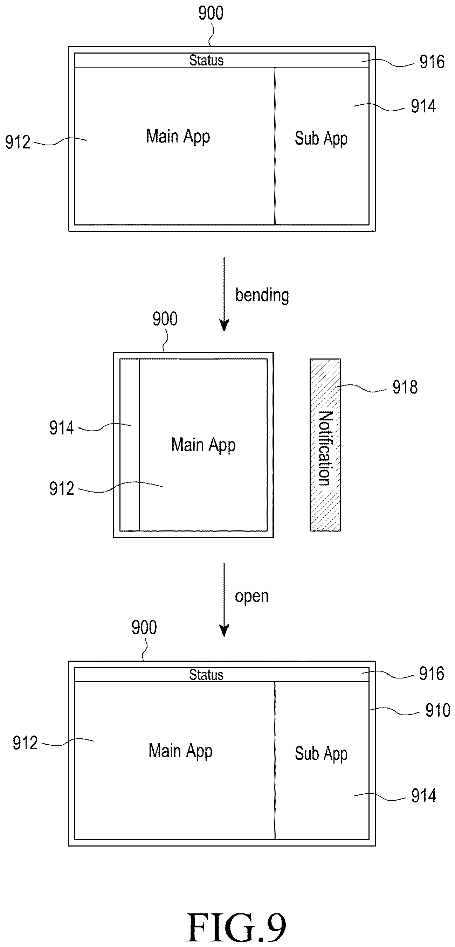

FIG. 9 illustrates functions or operations for relocating the main application, the sub application, and the status bar as the flexible device is bent according to various embodiments of the present disclosure.

Referring to FIG. 9, a flexible device 900 according to various embodiments of the present disclosure may display an execution screen 912 of the main application, an execution screen 914 of the sub application, and a status bar 916. When generation of an event for bending of the flexible device 900 is detected, the processor of the flexible device 900 may perform control to hierarchically display the execution screen 912 of the main application and the execution screen 914 of the sub application. Further, the processor may perform control to display the status bar 916 and/or a notification window 918 including information displayed on the status bar 916 on a side portion of the flexible device 900. When the generation of the event for opening of the flexible device 900 is detected, the processor may perform control to display the execution screen 912 of the main application, the execution screen 914 of the sub application, and the status bar 916 in the form right before the generation of the event for bending.

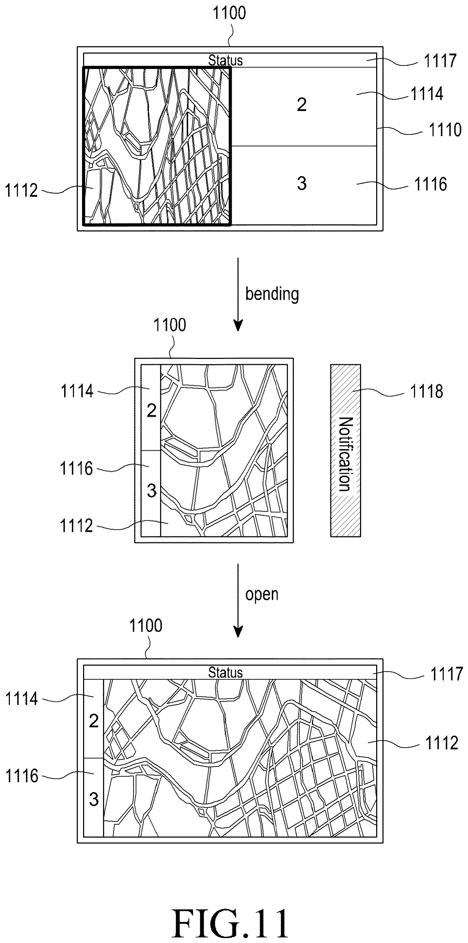

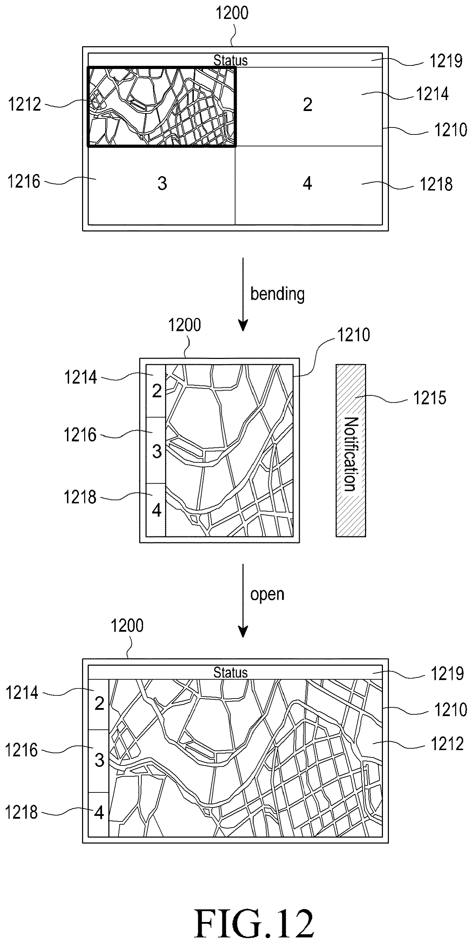

FIG. 10 illustrates functions or operations for relocating two windows and the status bar as the flexible device is bent according to various embodiments of the present disclosure. FIG. 11 illustrates functions or operations for relocating three windows and the status bar as the flexible device is bent according to various embodiments of the present disclosure. FIG. 12 illustrates functions or operations for relocating four windows and the status bar as the flexible device is bent according to various embodiments of the present disclosure.

Referring to FIG. 10, a flexible device 1000 according to various embodiments of the present disclosure may display a status bar 1016, and an execution screen 1012 of a first application and an execution screen 1014 of a second application, which are executed independently from each other in a split manner. When generation of an event for bending of the flexible device 1000 is detected, the processor of the flexible device 1000 may perform control to display one application currently focused (for example, the first application 1012) in the main area and display the other application in the sub area. Further, the processor may perform control to display the status bar 1016 and/or a notification window 1018 including information displayed on the status bar 1016 on a side portion of the flexible device 1000. When generation of an event for opening of the flexible device 1000 is detected, the processor may perform control to determine a type of the application displayed in the main area and relocate the execution screens 1012 and 1014 of the plurality of applications according to the type. In FIG. 10, since the application displayed in the main area is a "map application" in the type of displaying an image, the processor may perform control to enlarge and display the execution screen 1012 of the first application in the open state as illustrated in FIG. 10. The description of FIG. 10 may be equally applied to FIGs. 11 and 12.

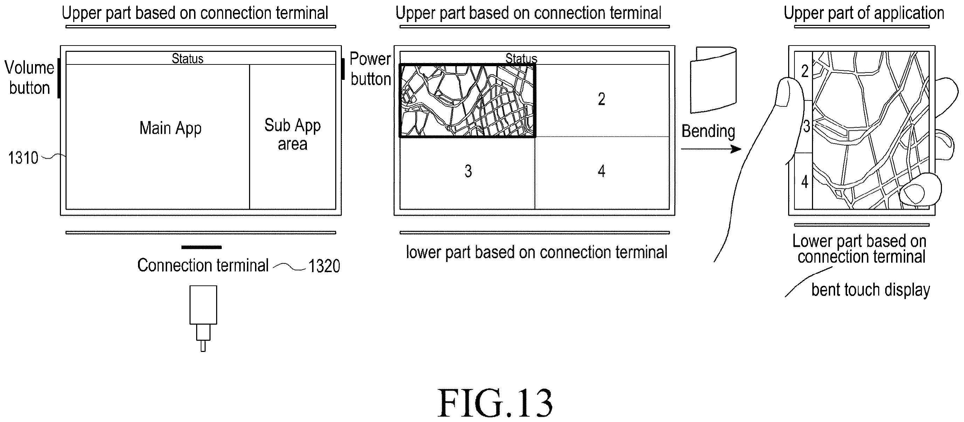

FIG. 13 illustrates functions or operations for displaying windows on the flexible device according to the window orientation determined on the basis of a connection terminal included in the flexible device according to various embodiments of the present disclosure.

The processor of the flexible device according to various embodiments of the present disclosure may determine upper and lower parts of the flexible device based on the location of a connection terminal 1320 located at the lower end of the flexible display 1310. The processor may determine a direction in which at least one window is displayed according to upper and lower part directions determined based on the location of the connection terminal 1320 and display the at least one window on the flexible display 1310.

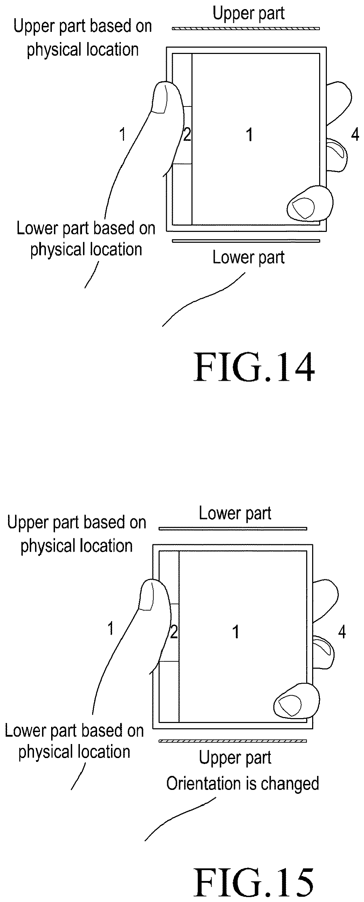

FIGs. 14 to 17 illustrate functions or operations for displaying windows on the flexible device according to the window orientation determined based on shape of the user's hand or fingers gripping the flexible device according to various embodiments of the present disclosure.

Referring to FIG. 14, the processor of the flexible device according to various embodiments may determine upper and lower parts of the flexible device based on the shape of the user's hand or fingers gripping the flexible device. FIG. 14 illustrates the case in which the location of the connection terminal (for example, the connection terminal 1320) faces downward (forward). The processor may determine the actual orientation (physical location) of the flexible device based on the shape of the user's hand or fingers holding the flexible device. Further, the processor may determine left/right side directions of the flexible device based on the number of user's fingers (for example, one finger on the left side, three fingers on the right side, and one finger on the rear surface). The processor may display at least one window on the flexible display based on the determined actual upward, downward, leftward, and rightward directions of the flexible device.

Referring to FIG. 15, the location of the connection terminal faces upward (backward). In this case, the processor may determine the actual orientation (physical location) of the flexible device by preferentially applying the shape of the user's hand gripping the flexible device. Further, the processor may determine left/right side directions of the flexible device based on the number of user's fingers (for example, one finger on the left side, three fingers on the right side, and one finger on the rear surface). At least one window may be displayed on the flexible display on the basis of the determined upward, downward, leftward, and rightward directions of the flexible device.

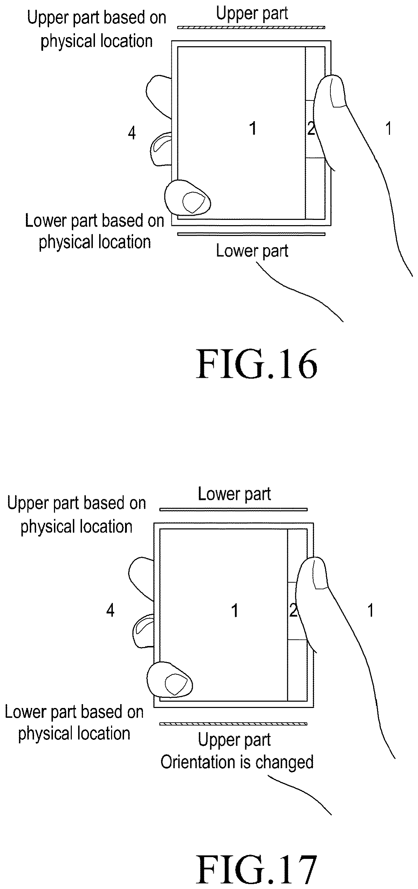

FIGs. 16 and 17 illustrate examples of the case in which the user holds the flexible device with the user's right hand. The description of FIGs. 14 and 15 may be equally applied to FIGs. 16 and 17.

Further, according to various embodiments of the present disclosure, at least one window may be displayed according to the actual orientation of the flexible device determined by a sensor module (for example, a gyro sensor) of the flexible device.

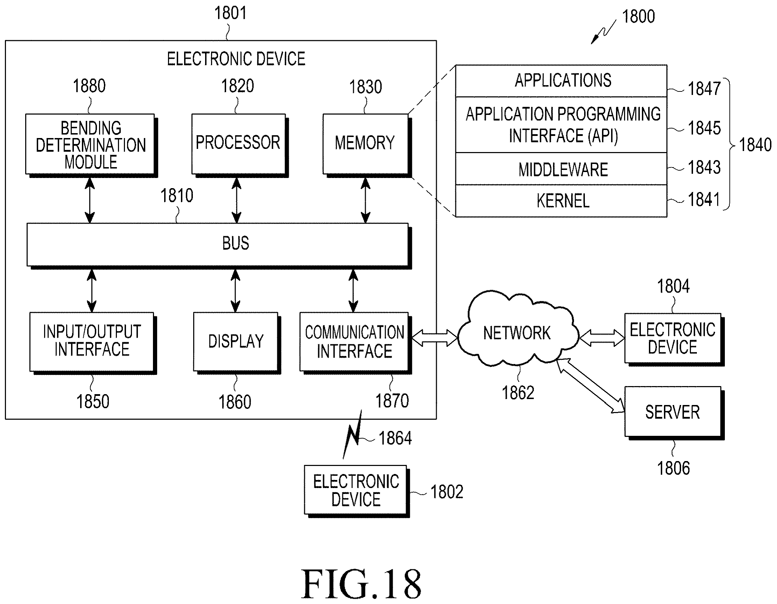

FIG. 18 illustrates an electronic device within a network environment according to various embodiments of the present disclosure.

An electronic device 1801 within a network environment 1800 according to various embodiments will be described with reference to FIG. 18. The electronic device 1801 may include a bus 1810, a processor 1820, a memory 1830, an input/output interface 1850, a display 1860, a communication interface 1870, and a bending determination module 1880. In some embodiments, the electronic device 1801 may omit at least one of the elements, or may further include other elements.

The bus 1810 may include, for example, a circuit which interconnects the elements 1810 to 1870 and delivers communication (for example, a control message and/or data) between the elements.

The processor 1820 may include one or more of a Central Processing Unit (CPU), an Application Processor (AP), and a Communication Processor (CP). The processor 1820, for example, may carry out operations or data processing relating to the control and/or communication of at least one other element of the electronic device 1801.

The memory 1830 may include volatile and/or non-volatile memory. The memory 1830 may store, for example, instructions or data relevant to at least one other element of the electronic device 1801. According to an embodiment, the memory 1830 may store software and/or a program 1840. The program 1840 may include, for example, a kernel 1841, middleware 1843, an Application Programming Interface (API) 1845, and/or applications (apps") 1847. At least some of the kernel 1841, the middleware 1843, and the API 1845 may be referred to as an Operating System (OS).

The kernel 1841 may control or manage system resources (for example, the bus 1810, the processor 1820, or the memory 1830) used for executing an operation or function implemented by other programs (for example, the middleware 1843, the API 1845, or the application 1847). Furthermore, the kernel 1841 may provide an interface through which the middleware 1843, the API 1845, or the applications 1847 may access the individual elements of the electronic device 1801 to control or manage the system resources.

The middleware 1843 may function as, for example, an intermediary for allowing the API 1845 or the applications 1847 to communicate with the kernel 1841 to exchange data.

Furthermore, the middleware 1843 may process one or more task requests, which are received from the applications 1847, according to priorities thereof. For example, the middleware 1843 may assign priorities for using the system resources (for example, the bus 1810, the processor 1820, the memory 1830, or the like) of the electronic device 1801 to one or more of the applications 1847. For example, the middleware 1843 may perform scheduling or loading balancing on the one or more task requests by processing the one or more task requests according to the priorities assigned to the one or more applications.

The API 1845, which is an interface through which the applications 1847 control functions provided from the kernel 1841 or the middleware 1843, may include, for example, at least one interface or function (for example, instruction) for file control, window control, image processing, text control, or the like.

The input/output interface 1850 may function as, for example, an interface that can forward instructions or data, which are input from a user or an external device, to the other element(s) of the electronic device 1801. Furthermore, the input/output interface 1850 may output instructions or data, which are received from the other element(s) of the electronic device 1801, to the user or the external device.

The display 1860 may include, for example, a Liquid Crystal Display (LCD), a Light-Emitting Diode (LED) display, an Organic Light-Emitting Diode (OLED) display, a MicroElectroMechanical Systems (MEMS) display, and an electronic paper display. The display 1860 may display, for example, various types of contents (for example, text, images, videos, icons, or symbols) to the user. The display 1860 may include a touch screen and may receive, for example, a touch, gesture, proximity, or hovering input using an electronic pen or the user's body part.

The communication interface 1870 may establish communication, for example, between the electronic device 1801 and an external device (for example, a first external electronic device 1802, a second external electronic device 1804, or a server 1806). For example, the communication interface 1870 may be connected to a network 1862 through wireless or wired communication to communicate with the external device (for example, the second external electronic device 1804 or the server 1806).

The wireless communication may use, for example, at least one of Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), Global System for Mobile Communications (GSM), and the like, as a cellular communication protocol. In addition, the wireless communication may include, for example, short range communication 1864. The short range communication 1864 may include at least one of, for example, Wi-Fi, Bluetooth, Near Field Communication (NFC), Global Navigation Satellite System (GNSS), and the like. The GNSS may include at least one of, for example, a Global Positioning System (GPS), a Global Navigation Satellite System (Glonass), a Beidou Navigation Satellite System (hereinafter referred to as "Beidou"), and a European Global Satellite-based Navigation System (Galileo), according to a use area, a bandwidth, or the like. Hereinafter, in the present disclosure, the "GPS" may be interchangeably used with the "GNSS". The wired communication may include, for example, at least one of a Universal Serial Bus (USB), a High Definition Multimedia Interface (HDMI), Recommended Standard 232 (RS-232), a Plain Old Telephone Service (POTS), and the like. The network 1862 may include at least one of a communication network such as a computer network (for example, a LAN or a WAN), the Internet, and a telephone network.

Each of the first and second external electronic devices 1802 and 1804 may be of the same or a different type from the electronic device 1801. According to an embodiment, the server 1806 may include a group of one or more servers. According to various embodiments of the present disclosure, all or some of operations performed by the electronic device 1801 may be performed by another electronic apparatus or multiple electronic devices (for example, the first and second external electronic apparatuses 1802 and 1804 or the server 1806). According to an embodiment, when the electronic device 1801 has to perform some functions or services automatically or in response to a request, the electronic device 1801 may make a request for performing at least some functions relating thereto to another device (for example, the electronic device 1802 or 1804 or the server 1806) instead of performing the functions or services by itself or in addition. Another electronic device (for example, the electronic device 1802 or 1804, or the server 1806) may execute the requested functions or the additional functions, and may deliver a result of the execution to the electronic apparatus 1801. The electronic device 1801 may provide the received result as it is, or may additionally process the received result to provide the requested functions or services. To this end, for example, cloud computing, distributed computing, or client-server computing technology may be used.

The bending determination module 1880 may determine bending of the electronic device 1801 or the display 1860. The bending determination module 1880 may include various sensor modules for determining bending of the electronic device 1801 or the display 1860.

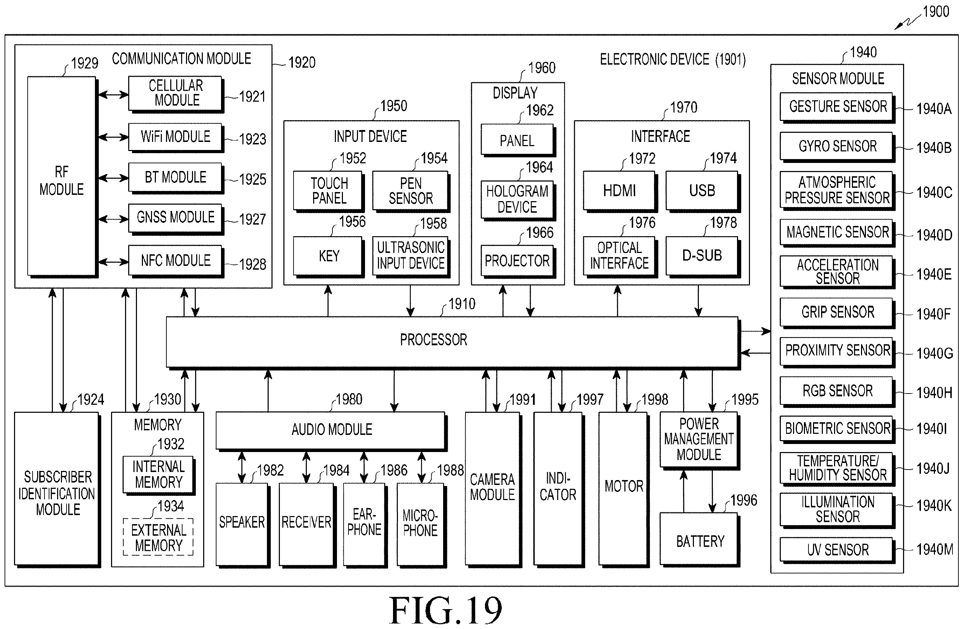

FIG. 19 illustrates an example for describing an electronic device according to various embodiments of the present disclosure.

Referring to FIG. 19, an electronic device 1901 may include, for example, the entirety or a part of the electronic device 1801 illustrated in FIG. 18. The electronic device 1901 may include at least one Application Processor (AP) 210, a communication module 1920, a subscriber identification module 1924, a memory 1930, a sensor module 1940, an input device 1950, a display 1960, an interface 1970, an audio module 1980, a camera module 1991, a power management module 1995, a battery 1996, an indicator 1997, and a motor 1998.

The processor 1910 may control a plurality of hardware or software elements connected thereto and may perform various data processing and operations by driving an operating system or an application. The processor 1910 may be implemented by, for example, a System on Chip (SoC). According to an embodiment, the processor 210 may further include a Graphic Processing Unit (GPU) and/or an image signal processor. The processor 1910 may also include at least some of the elements illustrated in FIG. 2 (for example, a cellular module 1921). The processor 1910 may load, in a volatile memory, instructions or data received from at least one of the other elements (for example, non-volatile memory) to process the loaded instructions or data, and may store various types of data in the non-volatile memory.

The communication module 1920 may have a configuration equal or similar to that of the communication interface 1870 of FIG. 1. The communication module 1920 may include, for example, a cellular module 1921, a Wi-Fi module 1923, a Bluetooth module 1925, a GNSS module 1927 (for example, a GPS module, a Glonass module, a Beidou module, or a Galileo module), an NFC module 1928, and a Radio Frequency (RF) module 1929.

The cellular module 1921 may provide, for example, a voice call, a video call, a text message service, an Internet service, or the like through a communication network. According to an embodiment, the cellular module 1921 may identify and authenticate the electronic device 1901 within a communication network using the subscriber identification module 1924 (for example, a SIM card). According to an embodiment, the cellular module 1921 may perform at least some of the functions that the processor 1910 may provide. According to an embodiment, the cellular module 1921 may include a Communication Processor (CP).

The Wi-Fi module 1923, the BT module 1925, the GNSS module 1927, or the NFC module 1928 may include, for example, a processor for processing data that is transmitted and received through the corresponding module. According to some embodiments, at least some (for example, two or more) of the cellular module 1921, the Wi-Fi module 1923, the BT module 1925, the GNSS module 1927, and the NFC module 1928 may be included in one Integrated Chip (IC) or IC package.

The RF module 1929 may transmit/receive, for example, a communication signal (for example, an RF signal). The RF module 1929 may include, for example, a transceiver, a Power Amplifier Module (PAM), a frequency filter, a Low Noise Amplifier (LNA), an antenna, and the like. According to another embodiment, at least one of the cellular module 1921, the Wi-Fi module 1923, the BT module 1925, the GPS module 1927, and the NFC module 1928 may transmit/receive an RF signal through a separate RF module.

The subscriber identification module 1924 may include, for example, a card that includes a subscriber identity module and/or an embedded SIM, and may contain unique identification information (for example, an Integrated Circuit Card Identifier (ICCID)) or subscriber information (for example, an International Mobile Subscriber Identity (IMSI)).

The memory 1930 (for example, the memory 1830) may include, for example, an internal memory 1932 or an external memory 1934. The internal memory 1932 may include, for example, at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like).

The external memory 1934 may further include a flash drive, for example, a Compact Flash (CF), a Secure Digital (SD), a Micro-Secure Digital (Micro-SD), a Mini-Secure Digital (Mini-SD), an extreme Digital (xD), a Multi-Media Card (MMC), a memory stick, or the like. The external memory 1934 may be functionally and/or physically connected to the electronic device 1901 through various interfaces.

The sensor module 1940 may, for example, measure a physical quantity or detect the operating state of the electronic device 1901 and may convert the measured or detected information into an electrical signal. The sensor module 1940 may include, for example, at least one of a gesture sensor 1940A, a gyro sensor 1940B, an atmospheric pressure sensor 1940C, a magnetic sensor 1940D, an acceleration sensor 1940E, a grip sensor 1940F, a proximity sensor 1940G, a color sensor 1940H (for example, a Red, Green, and Blue (RGB) sensor), a biometric sensor 19401, a temperature/humidity sensor 1940J, an illumination sensor 1940K, and a ultraviolet (UV) sensor 1940M. Additionally or alternatively, the sensor module 1940 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor. The sensor module 1940 may further include a control circuit for controlling one or more sensors included therein. In some embodiments, the electronic device 201 may further include a processor configured to control the sensor module 1940 as a part of or separately from the AP 1910, and may control the sensor module 1940 while the AP 1910 is in a sleep state.

The input device 1950 may include, for example, a touch panel 1952, a (digital) pen sensor 1954, a key 1956, or an ultrasonic input unit 1958. The touch panel 1952 may use, for example, at least one of a capacitive type, a resistive type, an infrared type, and an ultrasonic type. Furthermore, the touch panel 1952 may further include a control circuit. The touch panel 1952 may further include a tactile layer to provide a tactile reaction to a user.

The (digital) pen sensor 1954 may include, for example, a recognition sheet that is a part of, or separate from, the touch panel. The key 1956 may include, for example, a physical button, an optical key, or a keypad. The ultrasonic input device 1958 may detect ultrasonic waves, which are generated by an input tool, through a microphone (for example, a microphone 1988) to identify data corresponding to the detected ultrasonic waves.

The display 1960 (for example, the display 1860) may include a panel 1962, a hologram device 1964 or a projector 1966. The panel 1962 may have a configuration that is the same as, or similar to, that of the display 1860 illustrated in FIG. 1. The panel 1962 may be implemented to be, for example, flexible, transparent, or wearable. The panel 1962, together with the touch panel 1952, may be implemented as one module. The hologram device 1964 may show a three dimensional image in the air by using an interference of light. The projector 1966 may display an image by projecting light onto a screen. The screen may be located, for example, in the interior of, or on the exterior of, the electronic device 1901. According to one embodiment, the display 1960 may further include a control circuit for controlling the panel 1962, the hologram device 1964, or the projector 1966.

The interface 1970 may include, for example, a High-Definition Multimedia Interface (HDMI) 1972, a Universal Serial Bus (USB) 1974, an optical interface 1976, or a D-subminiature (D-sub) 1978. The interface 1970 may be included, for example, in the communication interface 1870 illustrated in FIG. 18. Additionally or alternatively, the interface 1970 may include, for example, a Mobile High-definition Link (MHL) interface, a Secure Digital (SD) card/Multi-Media Card (MMC) interface, or an Infrared Data Association (IrDA) standard interface.

The audio module 1980 may convert, for example, a sound into an electrical signal, and vice versa. At least some elements of the audio module 1980 may be included, for example, in the input/output interface 1845 illustrated in FIG. 18. The audio module 1980 may process sound information that is input or output through, for example, a speaker 1982, a receiver 1984, earphones 1986, the microphone 1988, and the like.

The camera module 1991 is a device that can photograph a still image and a dynamic image. According to an embodiment, the camera module 1991 may include one or more image sensors (for example, a front sensor or a rear sensor), a lens, an Image Signal Processor (ISP), or a flash (for example, an LED, a xenon lamp, and the like).

The power management module 1995 may manage, for example, the power of the electronic device 1901. According to an embodiment, the power management module 1995 may include a Power Management Integrated Circuit (PMIC), a charger Integrated Circuit (IC), or a battery or fuel gauge. The PMIC may use a wired and/or wireless charging method. Examples of the wireless charging method may include a magnetic resonance method, a magnetic induction method, an electromagnetic wave method, and the like. Additional circuits (for example, a coil loop, a resonance circuit, a rectifier, and the like) for wireless charging may be further included. The battery gauge may measure, for example, the residual amount of the battery 1996 and a voltage, current, or temperature while charging. The battery 1996 may include, for example, a rechargeable battery and/or a solar battery.

The indicator 1997 may display a particular state, for example, a booting state, a message state, a charging state, or the like of the electronic device 1901 or a part (for example, the processor 1910) of the electronic device 1901. The motor 1998 may convert an electrical signal into a mechanical vibration and may generate a vibration, a haptic effect, and the like. Although not illustrated, the electronic device 1901 may include a processing unit (for example, a GPU) for supporting mobile TV. The processing unit for supporting the mobile TV may process media data according to a standard, such as Digital Multimedia Broadcasting (DMB), Digital Video Broadcasting (DVB), MediaFlo^{™}, and the like.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

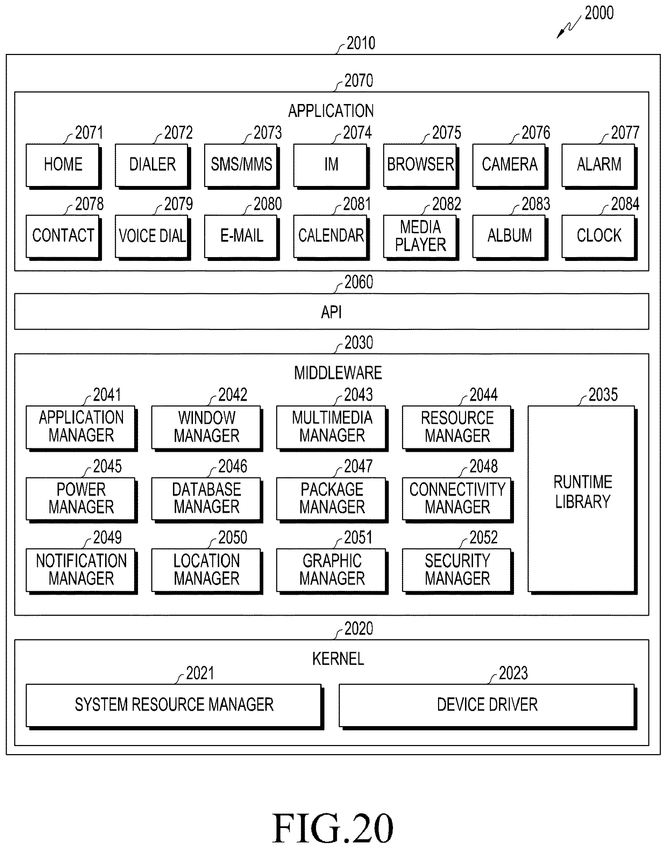

FIG. 20 illustrates an example for describing a program module according to various embodiments of the present disclosure.

According to an embodiment, the program module 2010 (for example, the program 1840) may include an Operating System (OS) that controls resources relating to an electronic device (for example, the electronic device 1801) and/or various applications (for example, the applications 1847) that are executed in the operating system. The operating system may be, for example, Android, iOS, Windows, Symbian, Tizen, Bada, and the like

The program module 2010 may include a kernel 2020, middleware 2030, an Application Programming Interface (API) 2060, and/or applications 2070. At least a part of the program module 2010 may be preloaded on the electronic device, or may be downloaded from an external electronic device (for example, the electronic device 1802 or 1804 or the server 1806).

The kernel 2020 (for example, the kernel 1841) may include, for example, a system resource manager 2021 and/or a device driver 2023. The system resource manager 2021 may control, allocate, or retrieve system resources. According to an embodiment, the system resource manager 2021 may include a process manager, a memory manager, or a file system manager. The device driver 2023 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 2030 may provide a function required by the applications 2070 in common or provide various functions to the applications 2070 through the API 2060 so that the applications 2070 may efficiently use limited system resources within the electronic device. According to an embodiment, the middleware 2030 (for example, the middleware 1843) may include, for example, at least one of a runtime library 2035, an application manager 2041, a window manager 2042, a multimedia manager 2043, a resource manager 2044, a power manager 2045, a database manager 2046, a package manager 2047, a connectivity manager 2048, a notification manager 2049, a location manager 2050, a graphic manager 2051, and a security manager 2052.

The runtime library 2035 may include, for example, a library module that a compiler uses in order to add a new function through a programming language while the applications 2070 are being executed. The runtime library 2035 may perform input/output management, memory management, the functionality for an arithmetic function, and the like.

The application manager 2041 may manage, for example, the life cycle of at least one of the applications 2070. The window manager 2042 may manage Graphical User Interface (GUI) resources used on a screen. The multimedia manager 2043 may determine formats required to reproduce various media files and may encode or decode a media file using a coder/decoder (codec) appropriate for the corresponding format. The resource manager 2044 may manage resources, such as the source code, the memory, the storage space, and the like of at least one of the applications 2070.

The power manager 2045 may operate together with, for example, a Basic Input/Output System (BIOS) to manage a battery or power and provide power information required for the operation of the electronic device. The database manager 2046 may generate, search for, and/or change a database to be used by at least one of the applications 2070. The package manager 2047 may manage the installation or update of an application that is distributed in the form of a package file.

The connectivity manager 2048 may manage a wireless connection, such as Wi-Fi, Bluetooth, and the like. The notification manager 2049 may display or notify an event, such as an arrival message, an appointment, a proximity notification, and the like, in such a manner as not to disturb a user. The location manager 2050 may manage the location information of the electronic device. The graphic manager 2051 may manage a graphic effect to be provided to a user and a user interface relating to the graphic effect. The security manager 2052 may provide various security functions required for system security, user authentication, and the like. According to an embodiment, in a case where the electronic device (for example, the electronic device 1801) has a telephone call function, the middleware 2030 may further include a telephony manager for managing a voice or video call function of the electronic device.

The middleware 2030 may include a middleware module that forms a combination of various functions of the above-described elements. The middleware 2030 may provide specialized modules according to the types of operating systems in order to provide differentiated functions. Furthermore, the middleware 2030 may dynamically remove some of the existing elements, or may add new elements.

The API 2060 (for example, the API 1845) is, for example, a set of API programming functions, and may be provided with different configurations according to operating systems. For example, in the case of Android or iOS, one API set may be provided for each platform, and in the case of Tizen, two or more API sets may be provided for each platform.

The applications 2070 (for example, the applications 1847) may include one or more applications that can perform functions, for example, a home application 2071, dialer 2072, an SMS/MMS application 2073, an Instant Message (IM) application 2074, a browser application 2075, a camera application 2076, an alarm application 2077, a contact application 2078, a voice dial application 2079, an e-mail application 2080, a calendar application 2081, a media player application 2082, an album application 2083, a clock application 2084, a health care application (for example, measuring exercise quantity or blood sugar), and an application of providing environment information (for example, atmospheric pressure, humidity, temperature information, and the like).

According to an embodiment, the applications 2070 may include an application (hereinafter, referred to as an "information exchange application" for convenience of description) that supports information exchange between the electronic device (for example, the electronic device 1801) and an external electronic device (for example, the electronic device 1802 or 1804). The information exchange application may include, for example, a notification relay application for transferring specific information to an external electronic device or a device management application for managing an external electronic device.

For example, the notification relay application may include a function of transferring, to the external electronic device (for example, the electronic device 1802 or 1804), notification information that is generated from the other applications (for example, the SMS/MMS application, the e-mail application, the health care application, the environmental information application, and the like) of the electronic device. Furthermore, the notification relay application may, for example, receive notification information from the external electronic device and may provide the received notification information to a user.

The device management application may manage (for example, install, delete, or update), for example, at least one function of an external electronic device (for example, the electronic device 1802 or 1804) that communicates with the electronic device (for example, a function of turning on/off the external electronic device itself (or some components thereof) or a function of adjusting the brightness (or resolution) of a display), applications that operate in the external electronic device, or services (for example, a call service, a message service, and the like) that are provided by the external electronic device.

According to an embodiment, the applications 2070 may include applications (for example, a health care application of a mobile medical appliance, and the like) that are specified according to attributes of an external electronic device (for example, the electronic device 1802 or 1804). According to an embodiment, the applications 2070 may include applications that are received from an external electronic device (for example, the server 1806, or the electronic device 1802 or 1804). According to an embodiment, the applications 2070 may include preloaded applications or third-party applications that can be downloaded from a server. Names of the elements of the program module 2010, according to the above-described embodiments of the present disclosure, may change depending on the type of OS.

According to various embodiments, at least a part of the program module 2010 may be implemented in software, firmware, hardware, or a combination of two or more thereof. At least some of the program module 2010 may be implemented (for example, executed) by, for example, the processor (for example, the processor 1910). At least some of the program module 2010 may include, for example, a module, a program, a routine, a set of instructions, and/or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 1820), may cause the one or more processors to execute the function corresponding to the instruction. The computer-readable storage medium may be, for example, the memory 1830.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Furthermore, some operations may be executed in a different order or may be omitted, or other operations may be added. Various embodiments disclosed herein are provided merely to easily describe technical details of the present disclosure and to help the understanding of the present disclosure, and are not intended to limit the scope of the present disclosure. Accordingly, the scope of the present disclosure should be construed as including all modifications or various other embodiments based on the technical idea of the present disclosure.

## Claims

1. A flexible device (300) comprising:
a sensor module (120);
a flexible display (140); and
a processor (110) configured to:
control the flexible display (140) to display a first execution screen of a first application and a second execution screen of a second application in a first window (312) and a second window (314), respectively;
when it is detected that, by the sensor module (120), the flexible device (300) is bent greater than a predetermined angle and such that the flexible display forms a front surface and a rear surface, wherein the first window and at least a first portion of the second window is displayed on the front surface and the rear surface of the flexible display (140) is turned off, while the first execution screen of the first application and the second execution screen of the second application are displayed in the first window (312) and the second window (314), respectively, control the flexible display (140) to overlappingly display the first window (312) and the second window (314) according to a predetermined ratio, wherein the predetermined angle is an angle for determining whether the flexible device is bent or not; and
when generation of an application switching event is detected by the sensor module (120), control the flexible display (140) to swap locations of the first window (312) and the second window (314) and display the swapped first window (312) and second window (314), wherein the application switching event includes a touch input to the rear surface of the flexible display (140) while the flexible device (300) is bent.

2. The flexible device (300) of claim 1, wherein the second application includes an application for performing at least one function among a plurality of functions included in the first application.

3. The flexible device (300) of claim 1, wherein the processor is further configured to control to display the first window (312, 412, 512, 612, 712) on a higher layer than the second window (314, 414, 514, 614, 714) and overlappingly display the first window (312, 412, 512, 612, 712) and the second window (314, 414, 514, 614, 714) according to the predetermined ratio, when it is detected that the flexible device (300) is bent greater than the predetermined angle by the sensor module.

4. The flexible device (300) of claim 1, wherein the processor (110) is further configured to control the flexible display (140) to display only the first window (312) on the flexible display (140) when a predetermined time passes.

5. The flexible device (300) of claim 1, wherein the processor (110) is further configured to control the flexible display (140) to display a window in which a last touch input was performed by the user on a higher layer than the other window, before the flexible device (300) is bent.

6. The flexible device (300) of claim 1, wherein the processor (110) is further configured to control the flexible display (140) to move, in a left or right side of the flexible display (140), a status bar displayed in an upper side of the flexible display (140) , when it is detected that the flexible device (300) is bent greater than the predetermined angle by the sensor module.

7. The flexible device (300) of claim 1, wherein the processor (110) is further configured to control the flexible display (140) to display an indicator for displaying a notification window including status information related to the flexible device, when a user's touch input for the flexible display is detected by the sensor module (120).

8. The flexible device (300) of claim 1, wherein, the processor (110) is further configured to control the flexible display (140) to turn over the first window (312) and the second window (314) according to an event for turning over and display the turned over first window (312) and second window (314), when an event for turning over of the flexible device is detected by the sensor module (120).

9. The flexible device (300) of claim 1, wherein the processor (110) is further configured to control the flexible display(140) to relocate a plurality of displayed windows including the first and second windows (312, 314) when it is detected that the flexible device (300) is bent greater than the predetermined angle by the sensor module, while the plurality of windows including the first and second windows (312,3124) in which a plurality of applications including the first and second applications are executed are displayed on the flexible display (140).

10. The flexible device (300) of claim 9, wherein, the processor is further configured to control the flexible display (140) to display one currently activated window in a main area, when it is detected that the flexible device (300) is bent greater than the predetermined angle by the sensor module.

11. The flexible device (300) of claim 10, wherein the processor (110) is further configured to control to split and display the plurality of windows when the flexible display (140) is open within a predetermined time after the flexible device (300) is bent, and to determine a display type in the state in which the flexible display (140) is open according to a type of the application displayed in the main area and display the plurality of windows according to the determined display type when the flexible display (140) is open after a predetermined time after the flexible device (300) is bent.

12. The flexible device (300) of claim 10, wherein the processor (110) is further configured to control the flexible display (140) to display a window other than the one window in a sub area located around the main area, and the main area and the sub area are displayed on different layers.

13. A computer-readable recording medium storing instructions configured to perform at least one operation by a processor (110) of a flexible device, the at least one operation comprising:
controlling a flexible display (140) of the flexible device (300) to display a first execution screen of a first application and a second execution screen of a second application in a first window (312) and a second window (314), respectively;
when it is detected that, by a sensor module (120) of the flexible display (140), the flexible display is bent greater than a predetermined angle and such that the flexible display forms a front surface and a rear surface, wherein the first window and at least a first portion of the second window is displayed on the front surface and the rear surface of the flexible display (140) is turned off, while the first execution screen of the first application and the second execution screen of the second application are displayed in the first window (312) and the second window (314), respectively, controlling the flexible display (140) to overlappingly display the first window (312) and the second window (314) according to a predetermined ratio, wherein the predetermined angle is an angle for determining whether the flexible device is bent or not; and
when generation of an application switching event is detected by the sensor module (120), controlling the flexible display (140) to swap locations of the first window (312) and the second window (314) and display the swapped first window (312) and second window (314), wherein the application switching event includes a touch input to the rear surface of the flexible display (140) while the flexible device (300) is bent.

14. The computer-readable recording medium of claim 13, wherein the at least one operation further comprises:
displaying a plurality of windows in which a plurality of applications is executed on the flexible display (140);
detecting the generation for bending of the flexible display (140); and
relocating the plurality of displayed windows when it is detected that the flexible device (300) is bent greater than the predetermined angle by the sensor module, and
wherein the second application includes an application for performing at least one function among a plurality of functions included in the first application.

## Patentansprüche

1. Flexible Vorrichtung (300), umfassend:
ein Sensormodul (120);
eine flexible Anzeige (140); und
einen Prozessor (110), der für Folgendes konfiguriert ist:
Steuern der flexiblen Anzeige (140), um einen ersten Ausführungsbildschirm einer ersten Anwendung und einen zweiten Ausführungsbildschirm einer zweiten Anwendung jeweils in einem ersten Fenster (312) und einem zweiten Fenster (314) anzuzeigen;
wenn durch das Sensormodul (120) erfasst wird, dass die flexible Vorrichtung (300) um mehr als einen vorbestimmten Winkel gebogen ist und sodass die flexible Anzeige eine Vorderfläche und eine Rückfläche bildet, wobei das erste Fenster und mindestens ein erster Abschnitt des zweiten Fensters auf der Vorderfläche angezeigt werden und die Rückfläche der flexiblen Anzeige (140) ausgeschaltet ist, während der erste Ausführungsbildschirm der ersten Anwendung und der zweite Ausführungsbildschirm der zweiten Anwendung jeweils in dem ersten Fenster (312) und dem zweiten Fenster (314) angezeigt werden, Steuern der flexiblen Anzeige (140), um das erste Fenster (312) und das zweite Fenster (314) gemäß einem vorbestimmten Verhältnis überlappend anzuzeigen, wobei der vorbestimmte Winkel ein Winkel zum Bestimmen ist, ob die flexible Anzeige gebogen ist oder nicht; und
wenn Erzeugung eines Anwendungsumschaltereignisses durch das Sensormodul (120) erfasst wird, Steuern der flexiblen Anzeige (140), um Stellen des ersten Fensters (312) und des zweiten Fensters (314) zu tauschen und das getauschte erste Fenster (312) und zweite Fenster (314) anzuzeigen, wobei das Anwendungsumschaltereignis eine Berührungseingabe an der Rückfläche der flexiblen Anzeige (140) beinhaltet, während die flexible Vorrichtung (300) gebogen ist.

2. Flexible Vorrichtung (300) nach Anspruch 1, wobei die zweite Anwendung eine Anwendung zum Durchführen von mindestens einer Funktion aus einer Vielzahl von Funktionen beinhaltet, die in der ersten Anwendung beinhaltet sind.

3. Flexible Vorrichtung (300) nach Anspruch 1, wobei der Prozessor ferner konfiguriert ist, um zu steuern, um das erste Fenster (312, 412, 512, 612, 712) auf einer höheren Ebene als das zweite Fenster (314, 414, 514, 614, 714) anzuzeigen und das erste Fenster (312, 412, 512, 612, 712) und das zweite Fenster (314, 414, 514, 614, 714) gemäß dem vorbestimmten Verhältnis überlappend anzuzeigen, wenn durch das Sensormodul erfasst wird, dass die flexible Vorrichtung (300) um mehr als den vorbestimmten Winkel gebogen ist.

4. Flexible Vorrichtung (300) nach Anspruch 1, wobei der Prozessor (110) ferner konfiguriert ist, um die flexible Anzeige (140) zu steuern, um nur das erste Fenster (312) auf der flexiblen Anzeige (140) anzuzeigen, wenn eine vorbestimmte Zeit verstreicht.

5. Flexible Vorrichtung (300) nach Anspruch 1, wobei der Prozessor (110) ferner konfiguriert ist, um die flexible Anzeige (140) zu steuern, um ein Fenster anzuzeigen, in dem eine letzte Berührungseingabe durch den Benutzer auf einer höheren Ebene als dem anderen Fenster durchgeführt wurde, bevor die flexible Vorrichtung (300) gebogen wird.

6. Flexible Vorrichtung (300) nach Anspruch 1, wobei der Prozessor (110) ferner konfiguriert ist, um die flexible Anzeige (140) zu steuern, um eine Statusleiste, die in einer oberen Seite der flexiblen Anzeige (140) angezeigt wird, in einer linken oder rechten Seite der flexiblen Anzeige (140) zu bewegen, wenn durch das Sensormodul erfasst wird, dass die flexible Vorrichtung (300) um mehr als den vorbestimmten Winkel gebogen ist.

7. Flexible Vorrichtung (300) nach Anspruch 1, wobei der Prozessor (110) ferner konfiguriert ist, um die flexible Anzeige (140) zu steuern, um einen Indikator zum Anzeigen eines Benachrichtigungsfensters anzuzeigen, beinhaltend Statusinformationen, die sich auf die flexible Vorrichtung beziehen, wenn die Berührungseingabe eines Benutzers für die flexible Anzeige durch das Sensormodul (120) erfasst wird.

8. Flexible Vorrichtung (300) nach Anspruch 1, wobei der Prozessor (110) ferner konfiguriert ist, um die flexible Anzeige (140) zu steuern, um das erste Fenster (312) und das zweite Fenster (314) gemäß einem Ereignis zum Wenden zu wenden und das gewendete erste Fenster (312) und zweite Fenster (314) anzuzeigen, wenn ein Ereignis zum Wenden der flexiblen Anzeige durch das Sensormodul (120) erfasst wird.

9. Flexible Vorrichtung (300) nach Anspruch 1, wobei der Prozessor (110) ferner konfiguriert ist, um die flexible Anzeige (140) zu steuern, um eine Vielzahl von angezeigten Fenstern, beinhaltend die ersten und die zweiten Fenster (312, 314), zu verschieben, wenn durch das Sensormodul erfasst wird, dass die flexible Vorrichtung (300) um mehr als den vorbestimmten Winkel gebogen ist, während die Vielzahl von Fenstern, beinhaltend die ersten und die zweiten Fenster (312,3124), in denen eine Vielzahl von Anwendungen, beinhaltend die ersten und die zweiten Anwendungen, ausgeführt werden, an der flexiblen Anzeige (140) angezeigt werden.

10. Flexible Vorrichtung (300) nach Anspruch 9, wobei der Prozessor ferner konfiguriert ist, um die flexible Anzeige (140) zu steuern, um ein aktuell aktiviertes Fenster in einem Hauptbereich anzuzeigen, wenn durch das Sensormodul erfasst wird, dass die flexible Vorrichtung (300) um mehr als den vorbestimmten Winkel gebogen ist.

11. Flexible Vorrichtung (300) nach Anspruch 10, wobei der Prozessor (110) ferner konfiguriert ist, um zu steuern, die Vielzahl von Fenstern zu teilen und anzuzeigen, wenn die flexible Anzeige (140) innerhalb einer vorbestimmten Zeit offen ist, nachdem die flexible Vorrichtung (300) gebogen ist, und um einen Anzeigetyp in dem Zustand, in dem die flexible Anzeige (140) offen ist, gemäß einem Typ der Anwendung zu bestimmen, die in dem Hauptbereich angezeigt wird, und die Vielzahl von Fenstern gemäß dem bestimmten Anzeigetyp anzuzeigen, wenn die flexible Anzeige (140) nach einer vorbestimmten Zeit, nachdem die flexible Vorrichtung (300) gebogen ist, offen ist.

12. Flexible Vorrichtung (300) nach Anspruch 10, wobei der Prozessor (110) ferner konfiguriert ist, um die flexible Anzeige (140) zu steuern, um ein anderes Fenster als das eine Fenster in einem Unterbereich anzuzeigen, der sich um den Hauptbereich herum befindet, und der Hauptbereich und der Unterbereich auf unterschiedlichen Ebenen angezeigt werden.

13. Computerlesbares Aufzeichnungsmedium, das Anweisungen speichert, die konfiguriert sind, um mindestens eine Operation durch einen Prozessor (110) einer flexiblen Vorrichtung durchzuführen, wobei die mindestens eine Operation Folgendes umfasst:
Steuern einer flexiblen Anzeige (140) der flexiblen Vorrichtung (300), um einen ersten Ausführungsbildschirm einer ersten Anwendung und einen zweiten Ausführungsbildschirm einer zweiten Anwendung jeweils in einem ersten Fenster (312) und einem zweiten Fenster (314) anzuzeigen;
wenn durch ein Sensormodul (120) der flexiblen Anzeige (140) erfasst wird, dass die flexible Anzeige um mehr als einen vorbestimmten Winkel gebogen ist und sodass die flexible Anzeige einer Vorderfläche und eine Rückfläche bildet, wobei das erste Fenster und mindestens ein Abschnitt des zweiten Fensters an der Vorderfläche angezeigt werden und die Rückfläche der flexiblen Anzeige (140) ausgeschaltet ist, während der erste Ausführungsbildschirm der ersten Anwendung und der zweite Ausführungsbildschirm der zweiten Anwendung jeweils in dem ersten Fenster (312) und dem zweiten Fenster (314) angezeigt werden, Steuern der flexiblen Anzeige (140), um das erste Fenster (312) und das zweite Fenster (314) gemäß einem vorbestimmten Verhältnis überlappend anzuzeigen, wobei der vorbestimmte Winkel ein Winkel zum Bestimmen ist, ob die flexible Vorrichtung gebogen ist oder nicht; und
wenn Erzeugung eines Anwendungsumschaltereignisses durch das Sensormodul (120) erfasst wird, Steuern der flexiblen Anzeige (140), um Stellen des ersten Fensters (312) und des zweiten Fensters (314) auszutauschen und das ausgetauschte erste Fenster (312) und zweite Fenster (314) anzuzeigen, wobei das Anwendungsumschaltereignis eine Berührungseingabe an der Rückfläche der flexiblen Anzeige (140) beinhaltet, während die flexible Vorrichtung (300) gebogen ist.

14. Computerlesbares Aufzeichnungsmedium nach Anspruch 13, wobei die mindestens eine Operation ferner Folgendes umfasst:
Anzeigen einer Vielzahl von Fenstern, in denen eine Vielzahl von Anwendungen ausgeführt wird, auf der flexiblen Anzeige (140);
Erfassen der Erzeugung zum Biegen der flexiblen Anzeige (140); und
Verschieben der Vielzahl von angezeigten Fenstern, wenn durch das Sensormodul erfasst wird, dass die flexible Vorrichtung (300) um mehr als den vorbestimmten Winkel gebogen ist, und
wobei die zweite Anwendung eine Anwendung zum Durchführen von mindestens einer Funktion aus einer Vielzahl von Funktionen beinhaltet, die in der ersten Anwendung beinhaltet sind.

## Revendications

1. Dispositif souple (300) comprenant :
un module de capteur (120) ;
un dispositif d'affichage souple (140) ; et
un processeur (110) configuré pour :
commander au dispositif d'affichage souple (140) d'afficher un premier écran d'exécution d'une première application et un second écran d'exécution d'une seconde application dans une première fenêtre (312) et une seconde fenêtre (314), respectivement ;
lorsque la courbure du dispositif souple (300) est détectée, par le module de capteur (120), au-delà d'un angle prédéfini, et de sorte que le dispositif d'affichage souple forme une surface avant et une surface arrière, ladite première fenêtre et au moins une première partie de la seconde fenêtre étant affichées sur la surface avant et la surface arrière du dispositif d'affichage souple (140) étant éteinte, pendant que le premier écran d'exécution de la première application et le second écran d'exécution de la seconde application sont affichés dans la première fenêtre (312) et la seconde fenêtre (314), respectivement, commander au dispositif d'affichage souple (140) d'afficher en chevauchement la première fenêtre (312) et la seconde fenêtre (314) selon un rapport prédéfini, ledit angle prédéfini étant un angle pour déterminer si le dispositif souple est courbé ou non ; et
lorsque la génération d'un événement de commutation d'application est détectée par le module de capteur (120), commander au dispositif d'affichage souple (140) de permuter les emplacements de la première fenêtre (312) et de la seconde fenêtre (314) et d'afficher les première fenêtre (312) et second fenêtre (314) permutées, ledit événement de commutation d'application comprenant une entrée tactile sur la surface arrière du dispositif d'affichage souple (140) pendant que le dispositif souple (300) est courbé.

2. Dispositif souple (300) selon la revendication 1, ladite seconde application comprenant une application destinée à réaliser au moins une fonction parmi une pluralité de fonctions comprises dans la première application.

3. Dispositif souple (300) selon la revendication 1, ledit processeur étant en outre configuré pour commander l'affichage de la première fenêtre (312, 412, 512, 612, 712) sur une couche supérieure à la seconde fenêtre (314, 414, 514, 614, 714) et l'affichage en chevauchement de la première fenêtre (312, 412, 512, 612, 712) et de la seconde fenêtre (314, 414, 514, 614, 714) selon le rapport prédéfini, lorsque la courbure du dispositif souple (300) au-delà de l'angle prédéfini est détecté par le module de capteur.

4. Dispositif souple (300) selon la revendication 1, ledit processeur (110) étant en outre configuré pour commander au dispositif d'affichage souple (140) d'afficher uniquement la première fenêtre (312) sur le dispositif d'affichage souple (140) lorsqu'un temps prédéfini s'est écoulé.

5. Dispositif souple (300) selon la revendication 1, ledit processeur (110) étant en outre configuré pour commander au dispositif d'affichage souple (140) d'afficher une fenêtre dans laquelle la dernière entrée tactile a été réalisée par l'utilisateur sur une couche supérieure à l'autre fenêtre, avant que le dispositif souple (300) ne soit courbé.

6. Dispositif souple (300) selon la revendication 1, ledit processeur (110) étant en outre configuré pour commander au dispositif d'affichage souple (140) de déplacer, dans un côté gauche ou droit du dispositif d'affichage souple (140), une barre d'état affichée dans un côté supérieur du dispositif d'affichage souple (140), lorsque la courbure du dispositif souple (300) au-delà de l'angle prédéfini est détectée par le module de capteur.

7. Dispositif souple (300) selon la revendication 1, ledit processeur (110) étant en outre configuré pour commander au dispositif d'affichage souple (140) d'afficher un indicateur pour afficher une fenêtre de notification comprenant des informations d'état relatives au dispositif souple, lorsqu'une entrée tactile d'un utilisateur pour le dispositif d'affichage souple est détectée par le module de capteur (120).

8. Dispositif souple (300) selon la revendication 1, ledit processeur (110) étant en outre configuré pour commander au dispositif d'affichage souple (140) de retourner la première fenêtre (312) et la seconde fenêtre (314) selon un événement pour le retournement et afficher la première fenêtre (312) et la seconde fenêtre (314) retournées, lorsqu'un événement pour le retournement du dispositif souple est détecté par le module de capteur (120).

9. Dispositif souple (300) selon la revendication 1, ledit processeur (110) étant en outre configuré pour commander au dispositif d'affichage souple(140) de déplacer une pluralité de fenêtres affichées comprenant les première et seconde fenêtres (312, 314) lorsque la courbure du dispositif souple (300) au-delà de l'angle prédéfini est détectée par le module de capteur, pendant que la pluralité de fenêtres comprenant les première et seconde fenêtres (312, 3124) dans lesquelles une pluralité d'applications comprenant les première et seconde applications sont exécutées sont affichées sur le dispositif d'affichage souple (140).

10. Dispositif souple (300) selon la revendication 9, ledit processeur étant en outre configuré pour commander au dispositif d'affichage souple (140) d'afficher une fenêtre actuellement activée dans une zone principale, lorsque la courbure du dispositif souple (300) au-delà de l'angle prédéfini est détectée par le module de capteur.

11. Dispositif souple (300) selon la revendication 10, ledit processeur (110) étant en outre configuré pour commander la division et l'affichage de la pluralité de fenêtres lorsque le dispositif d'affichage souple (140) est ouvert dans les limites d'un temps prédéfini après que le dispositif souple (300) est courbé, et pour déterminer un type d'affichage dans l'état dans lequel le dispositif d'affichage souple (140) est ouvert selon un type de l'application affichée dans la zone principale et afficher la pluralité de fenêtres selon le type d'affichage déterminé lorsque le dispositif d'affichage souple (140) est ouvert après un temps prédéfini après que le dispositif souple (300) est courbé.

12. Dispositif souple (300) selon la revendication 10, ledit processeur (110) étant en outre configuré pour commander au dispositif d'affichage souple (140) d'afficher une fenêtre autre que la fenêtre dans une sous-zone située autour de la zone principale, et ladite zone principale et ladite sous-zone étant affichées sur des couches différentes.

13. Support d'enregistrement lisible par ordinateur stockant des instructions configurées pour réaliser au moins une opération par un processeur (110) d'un dispositif souple, la au moins une opération comprenant :
la commande au dispositif d'affichage souple (140) du dispositif souple (300) d'afficher un premier écran d'exécution d'une première application et un second écran d'exécution d'une seconde application dans une première fenêtre (312) et une seconde fenêtre (314), respectivement ;
lorsque le module de capteur (120) du dispositif d'affichage souple (140) détecte que le dispositif d'affichage souple est courbé au-delà d'un angle prédéfini et de sorte que le dispositif d'affichage souple forme une surface avant et une surface arrière, ladite première fenêtre et au moins une première partie de la seconde fenêtre étant affichées sur la surface avant et ladite surface arrière du dispositif d'affichage souple (140) étant éteinte, pendant que le premier écran d'exécution de la première application et le second écran d'exécution de la seconde application sont affichés dans la première fenêtre (312) et la seconde fenêtre (314), respectivement, la commande au dispositif d'affichage souple (140) d'afficher en chevauchement la première fenêtre (312) et la seconde fenêtre (314) selon un rapport prédéfini, ledit angle prédéfini étant un angle pour déterminer si le dispositif souple est courbé ou non ; et
lorsque la génération d'un événement de commutation d'application est détectée par le module de capteur (120), la commande au dispositif d'affichage souple (140) pour permuter les emplacements de la première fenêtre (312) et de la seconde fenêtre (314) et afficher les première fenêtre (312) et seconde fenêtre (314) permutées, ledit événement de commutation d'application comprenant une entrée tactile sur la surface arrière du dispositif d'affichage souple (140) pendant que le dispositif souple (300) est courbé.

14. Support d'enregistrement lisible par ordinateur selon la revendication 13, ladite au moins une opération comprenant en outre :
l'affichage d'une pluralité de fenêtres dans lesquelles une pluralité d'applications sont exécutées sur le dispositif d'affichage souple (140) ;
la détection de la génération pour la courbure du dispositif d'affichage souple (140) ; et
le repositionnement de la pluralité de fenêtres affichées lorsque la courbure du dispositif souple (300) au-delà de l'angle prédéfini est détectée par le module de capteur, et
ladite seconde application comprenant une application destinée à réaliser au moins une fonction parmi une pluralité de fonctions comprises dans la première application.
